(19) Europäisches Patentamt
European Patent Office
Office européen des brevets

(11) **EP 3 752 337 B1**

(12) **EUROPÄISCHE PATENTSCHRIFT**

(45) Veröffentlichungstag und Bekanntmachung des Hinweises auf die Patenterteilung:
**29.11.2023   Patentblatt 2023/48**

(21) Anmeldenummer: **19703386.3**

(22) Anmeldetag: **13.02.2019**

(51) Internationale Patentklassifikation (IPC):
**B29C 64/118** (2017.01)   **B33Y 10/00** (2015.01)
**C09J 175/06** (2006.01)

(52) Gemeinsame Patentklassifikation (CPC):
**B29C 64/118; B33Y 10/00; C09J 175/06;**
C08G 2170/20

(86) Internationale Anmeldenummer:
**PCT/EP2019/053573**

(87) Internationale Veröffentlichungsnummer:
**WO 2019/158599 (22.08.2019 Gazette 2019/34)**

(54) **VERFAHREN ZUM APPLIZIEREN EINES EIN SCHMELZBARES POLYMER ENTHALTENDEN MATERIALS**

METHOD FOR APPLYING A MATERIAL CONTAINING A MELTABLE POLYMER

PROCÉDÉ D'APPLICATION D'UN MATÉRIAU CONTENANT UN POLYMÈRE FUSIBLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.02.2018   EP 18157167**

(43) Veröffentlichungstag der Anmeldung:
**23.12.2020   Patentblatt 2020/52**

(73) Patentinhaber: **Covestro Intellectual Property GmbH & Co. KG**
**51373 Leverkusen (DE)**

(72) Erfinder:
• **ACHTEN, Dirk**
**51375 Leverkusen (DE)**
• **BÜSGEN, Thomas**
**51377 Leverkusen (DE)**
• **TILLACK, Jörg**
**42699 Solingen (DE)**
• **REICHERT, Peter**
**41541 Dormagen (DE)**
• **DEGIORGIO, Nicolas**
**47807 Krefeld (DE)**
• **MELCHIORS, Martin**
**42799 Leichlingen (DE)**
• **ARNDT, Wolfgang**
**41542 Dormagen (DE)**

(74) Vertreter: **Davepon, Björn**
**Patentanwaltskanzlei Davepon**
**Schloss Dyck**
**41363 Jüchen (DE)**

(56) Entgegenhaltungen:
WO-A1-2015/109141     WO-A1-2015/120429
US-A1- 2018 044 523

**Beschreibung**

Die vorliegende Erfindung betrifft ein Verfahren zum Applizieren eines ein schmelzbares Polymer enthaltenden Materials, umfassend den Schritt des Auftragens eines Filaments des zumindest teilweise geschmolzenen Materials aus einer Austragsöffnung einer Düse heraus auf ein Substrat.

Als additive Fertigungsverfahren werden solche Verfahren bezeichnet, mit denen Gegenstände schichtweise aufgebaut werden. Sie unterscheiden sich daher deutlich von anderen Verfahren zur Herstellung von Gegenständen wie Fräsen oder Bohren. Bei letztgenannten Verfahren wird ein Gegenstand so bearbeitet, dass er durch Wegnahme von Material seine Endgeometrie erhält.

Additive Fertigungsverfahren nutzen unterschiedliche Materialien und Prozesstechniken, um Gegenstände schichtweise aufzubauen. Beim sogenannten Fused Deposition Modeling (FDM) oder Schmelzschichtungsverfahren beispielsweise wird ein thermoplastischer Kunststoffdraht verflüssigt und mit Hilfe einer Düse schichtweise auf einer beweglichen Bauplattform abgelegt. Beim Erstarren entsteht ein fester Gegenstand. Die Steuerung der Düse und der Bauplattform erfolgt auf der Grundlage einer CAD-Zeichnung des Gegenstands. Ein frühes Patentdokument für diese Technologie ist US 5,121,329. Ist die Geometrie dieses Gegenstands komplex, zum Beispiel mit geometrischen Hinterschneidungen, müssen zusätzlich Stützmaterialien mitgedruckt und nach Fertigstellung des Gegenstands wieder entfernt werden.

Das thermoplastische Polyurethan gemäß WO 2015/197515 A1 weist einen Schmelzbereich (DSC, Differential Scanning Calorimetry; zweite Aufheizung mit Aufheizrate 5K/min) von 20 bis 170° C und eine Shore A Härte gemäß DIN ISO 7619-1 von 50 bis 95 auf, hat bei einer Temperatur T eine Schmelzvolumenrate (melt volume rate (MVR)) gemäß ISO 1133 von 5 bis 15 cm$^3$/10 min und eine Änderung des MVR bei einer Erhöhung dieser Temperatur T um 20 °C von kleiner 90 cm$^3$/10 min auf. Der Einsatzzweck ist die Herstellung von Gegenständen in pulverbasierten additiven Fertigungsverfahren.

WO 2016/198425 A1 offenbart eine thermisch leitfähige Schmelzklebstoff-Zusammensetzung umfassend a) wenigstens einen thermisch leitfähigen Füllstoff, wobei der thermisch leitfähige Füllstoff eine Mischung aus plättchenförmigen und ersten kugelförmigen Partikeln enthält in einem Verhältnis von 10:1 und wobei die plättchenförmigen Partikel ein Seitenverhältnis von 1.27 zu 7 aufweisen. Alternativ enthält der thermisch leitfähige Füllstoff eine Mischung von zweiten kugelförmigen Partikeln mit einer durchschnittlichen Partikelgröße von 35 bis 55 μm und dritten kugelförmigen Partikeln mit einer durchschnittlichen Partikelgröße von 2 bis 15 μm in einem Verhältnis von 10:1. Der thermisch leitfähige Füllstoff ist ausgewählt aus der Gruppe bestehend aus Zinnoxid, Indiumoxid, Antimonoxid, Aluminiumoxid, Titanoxid, Eisenoxid, Magnesiumoxid, Zinkoxid, Seltenerd-Oxide, Alkali und Erdalkalisufate, Kreide, Bornitrid, Alkalisilikat, Siliziumoxid, Eisen, Kupfer, Aluminium, Zink, Gold, Silber, Zinn, Alkali und Erdalkalihalogenide, Alkali und Erdalkaliphosphate und deren Mischungen. Weiterhin enthält die Zusammensetzung b) wenigstens ein (Co)Polymer aus der Gruppe bestehend aus Polyamid, thermoplastische Polyamide, Copolyamide, Butylkautschuk, Polybutylen, Poly(meth)acrylate, Polystyrol, Polyurethane, thermoplastisches Polyurethan, Polyester, Ethylencopolymere, Ethylen-vinyl-copolymere, SB-Kautschuk, SEBS-Kautschuk, SI-Kautschuk, SIS-Kautschuk, SBS-Kautschuk, SIB-Kautschuk, SIBS-Kautschuk, Polylactid, Silikone, Epoxyharze, Polyole und deren Mischungen. Gemäß einem Verwendungsanspruch soll das Material auch als Filament für das 3D-Drucken eingesetzt werden können.

DE 10 2012 020000 A1 betrifft ein mehrstufiges 3D Druckverfahren sowie eine für dieses Verfahren verwendbare Vorrichtung. Diese Patentanmeldung führt aus, dass nach dem Auspacken - auch als Entpacken bezeichneten Verfahrensschritt, die Formteile dem Endverfestigungsschritt zugeführt werden. Anschließend werden die Formteile weiteren Folgeprozessen zugeführt. Dieser Verfahrensschritt wird vorzugsweise als Wärmebehandlungsschritt ausgeführt. Als Beispiel können hier Teile aus Croning-Sand dienen, die nach dem Prozess hergestellt wurden. Nach dem Entpacken werden diese vorzugsweise wieder in ein weiteres Partikelmaterial eingebettet. Dieses weist jedoch keinerlei Binder-Umhüllung auf und ist vorzugsweise thermisch gut leitfähig. Im Anschluss werden die Teile in einem Ofen oberhalb der Schmelztemperatur des Binders wärmebehandelt. Das spezielle Phenolharz der Umhüllung in einer der bevorzugten Ausführungsformen wird dabei vernetzt und die Festigkeit steigt stark an. Allgemein sind für diesen Verfahrensschritt der Endverfestigung Schmelzklebstoffe bevorzugt. Als Basispolymere können vorzugsweise verwendet werden: PA (Polyamide), PE (Polyethylen), APAO (amorphe Polyalphaolefine), EVAC (Ethylenvinylacetat-Copolymere), TPE-E (Polyester-Elastomere), TPE-U (Polyurethan-Elastomere), TPE-A (Copolyamid-Elastomere) und Vinylpyrrolidon/Vinylacetat-Copolymere. Weitere übliche und dem Fachmann bekannte Zusatzstoffe wie Nukleierungsmittel können zugegeben werden.

WO 2015/109141 A1 offenbart ein 3D-Druckverfahren unter Verwendung von Polyurethanen und/oder Polyestern.

Die vorliegende Erfindung hat sich die Aufgabe gestellt, die Nachteile im Stand der Technik zumindest teilweise zu beheben. Insbesondere hat sie sich die Aufgabe gestellt, ein neuartiges Verarbeitungsverfahren für Hotmelt-Klebstoffe, insbesondere mit niedriger Temperaturstabilität, anzugeben.

Gelöst wird diese Aufgabe durch ein Verfahren gemäß Anspruch 1. Vorteilhafte Weiterbildungen sind in den Unteransprüchen angegeben. Sie können beliebig kombiniert werden, sofern sich aus dem Kontext nicht eindeutig das Gegenteil ergibt.

Erfindungsgemäß vorgeschlagen wird ein Verfahren zum Applizieren eines ein schmelzbares Polymer enthaltenden Materials, umfassend den Schritt:

-   Auftragen eines Filaments des zumindest teilweise geschmolzenen Materials aus einer Austragsöffnung eines Austragselementes heraus auf ein Substrat.

Das schmelzbare Polymer weist die folgenden Eigenschaften auf:

-   einen Schmelzpunkt (DSC, differential scanning calorimetry; 2. Aufheizung mit Aufheizrate 5 °C/min.) in einem Bereich von $\geq$ 40 °C bis $\leq$ 120 °C;

-   eine Glasübergangstemperatur (DMA, dynamisch-mechanische Analyse gemäß DIN EN ISO 6721-1:2011) in einem Bereich von $\geq$ -70 °C bis $\leq$ 30 °C;

-   einen Speichermodul G' (Platte/Platte-Oszillationsviskosimeter gemäß ISO 6721-10:2015 bei einer Frequenz von 1/s) bei 20 °C oberhalb des Schmelzpunkts von $\geq 1\cdot10^4$ Pa, bevorzugt $\geq 3\cdot10^4$ Pa, besonders bevorzugt $\geq 7\cdot10^4$ Pa;

-   einen Speichermodul G' (Platte/Platte-Oszillationsviskosimeter gemäß ISO 6721-10:2015 bei einer Frequenz von 1/s) bei 10 °C unterhalb des Schmelzpunkts bei vorangegangener Aufheizung auf eine Temperatur von 20 °C oberhalb des Schmelzpunktes und anschließender Abkühlung mit einer Abkühlrate von 1 °C/min. von $\leq 1\cdot10^7$ Pa, bevorzugt $\leq 5\cdot10^6$ Pa, besonders bevorzugt $\leq 1\cdot10^6$ Pa;

wobei das Filament während des Applikationsprozesses für $\leq$ 5 Minuten (bevorzugt $\leq$ 2.5 Minuten, mehr bevorzugt $\leq$ 1 Minute, besonders bevorzugt $\leq$ 30 Sekunden) eine Applikationstemperatur von $\geq$ 100 °C (bevorzugt $\geq$ 150 °C, mehr bevorzugt $\geq$ 200 °C) oberhalb des Schmelzpunktes des schmelzbaren Polymers aufweist und

wobei das schmelzbare Polymer weiterhin die Eigenschaft aufweist, dass der Speichermodul G' (Platte/Platte-Oszillationsviskosimeter gemäß ISO 6721-10:2015 bei einer Frequenz von 1/s) des schmelzbaren Polymers bei der höchsten während des Applikationsprozesses erreichten Applikationstemperatur um den Faktor $\geq$ 10 kleiner (bevorzugt $\geq$ 30 kleiner, ganz besonders bevorzugt $\geq$ 100 kleiner) ist als der Speichermodul G' (Platte/Platte-Oszillationsviskosimeter gemäß ISO 6721-10:2015 bei einer Frequenz von 1/s) bei einer Temperatur von 20° oberhalb des Schmelzpunktes des schmelzbaren Polymers.

Das schmelzbare Polymer ist ausgewählt aus der Gruppe bestehend aus: Polyurethan, Polyester oder deren Kombination.

Das Substrat, auf das das Filament aufgetragen wird, kann eine ebene oder gekrümmte Fläche sein oder aber auch die zuletzt aufgetragene Lage im Rahmen eines 3D-Druckverfahrens sein.

Das schmelzbare Polymer, welches in der Regel ein teilkristallines Polymer ist, lässt sich, ohne sich darauf beschränken zu wollen, als Hotmelt- oder Schmelzklebstoff bezeichnen. Es wurde überraschend gefunden, dass sich solche Hotmelts bei Temperaturen weit über ihrer Schmelztemperatur und ihrer Zersetzungstemperatur kurzzeitig verarbeiten lassen, ohne dass signifikante Einbußen ihrer gewünschten Eigenschaften auftreten. Unter der Zersetzungstemperatur wird hierbei eine Temperatur verstanden, bei der ein polymeres Material innerhalb eines Zeitraums von $\leq$ 1 Stunde seinen Speichermodul G' (DMA, dynamisch-mechanische Analyse gemäß DIN EN ISO 6721-1:2011 bei einer Frequenz von 1/s, insbesondere Platte/Platte-Oszillationsviskosimeter gemäß ISO 6721-10:2015 bei einer Frequenz von 1/s) mehr als verdoppelt oder aber der Speichermodul G' auf einen Wert von weniger als die Hälfte, bevorzugt weniger als 30%, besonders bevorzugt weniger als 10% und ganz besonders bevorzugt weniger als 5% des Ausgangswertes sinkt.

Vorzugsweise ist die Austragsöffnung eines Austragselementes eine Düse.

Besonders geeignet für das Applizieren des ein schmelzbares Polymer enthaltenden Materials haben sich Druckköpfe erwiesen, die nach dem Prinzip eines FDM-3D-Druckers funktionieren. Dabei wird üblicherweise ein vorextrudierter Strang eines thermoplastischen Materials (festes Filament) durch eine kurze Heizzone gefördert, um am Ende der Heizzone durch eine Düse mit einer geringeren Querschnittsfläche als der Querschnittsfläche des geförderten festen Filaments extrudiert zu werden. Der Druckkopf kann während der Extrusion in XYZ-Richtung frei im Raum bewegt werden, üblicherweise aber in einem konstanten Abstand oberhalb einer Substratfläche, wobei der Abstand zur Substratfläche gewöhnlich geringer ist als der mittlere Düsendurchmesser, so dass das Extrudate beim Ablegen auf das Substrat unter Druck verformt wird. Die Verfahrgeschwindigkeit des Druckkopfes ist dabei üblicherweise größer als die Extrusionsgeschwindigkeit des Extrudates aus der Düse, wodurch dieses eine zusätzliche Zugverformung erfährt. In FDM-Verfahren zur Herstellung additive gefertigter Bauteile werden typischerweise Verfahrgeschwindigkeiten von 20-100 mm/s gewählt. Bessere Ergebnisse werden üblicherweise mit niedrigen Verfahrgeschwindigkeiten erreicht.

Im erfindungsgemäßen Verfahren ist es dagegen vorteilhaft, Verfahrgeschwindigkeiten (Applikationsgeschwindigkeiten) von über 100 mm/s einzustellen. Die Auftragsschichtdicke sowie die Auftragsschichtbreite sind dabei durch das Verhältnis von Austragsgeschwindigkeit des Materials aus einer Austragsdüse, der Düsengeometrie, dem Materialdruck, der Verfahrgeschwindigkeit der Düse sowie Abstand der Düse von der Substratoberfläche steuerbar. Ist die Austragsgeschwindigkeit aus der Düse geringer als die Verfahrgeschwindigkeit und der Düsenabstand zum Substrat geringer als der Düsendurchmesser, so entstehen Beschichtungen mit einer Auftragsschichtdicke, die kleiner als der Düsendurchmesser ist. Wenn der Düsenabstand zum Substrat größer ist als der Düsendurchmesser und die Verfahrgeschwindigkeit ungleich der Austrittsgeschwindigkeit ist, so erfolgt keine kontinuierliche und gleichmäßige Schichtablage, weshalb diese Ausführungsform nicht bevorzugt wird.

Ist die Viskosität eines erfindungsgemäßen Hotmelts am Düsenausgang zu hoch, so wird die Austragsgeschwindigkeit durch den Druckaufbau im Druckkopf und die maximale Förderleistung begrenzt. Weiter verursacht ein hoher Druck am Düsenkopf aufgrund einer hohen Hotmelt Viskosität typischerweise eine deutliche Spritzquellung bis hin zu einer periodisch pulsierende Spritzquellung am Düsenausgang.

Die maximale Verfahrgeschwindigkeit, bei der noch eine kontinuierliche Schichtablage mit einem Schichtdickendurchmesser kleiner dem Düsendurchmesser erfolgt, ist deshalb ein guter Richtwert für einen stabilen Prozesszustand. Die Verfahrgeschwindigkeit ist weiterhin die bevorzugte Einstellgröße für einen FDM-Drucker, aus der im Druckprogramm bei vorgegebenem Schichtabstand und Düsengeometrie die gewünschte Austragsmenge berechnet wird und entsprechend die Materialfördergeschwindigkeit eingestellt wird.

Über die Verfahrgeschwindigkeit eines Druckkopfes mit einer 0.4 mm-Durchmesser Runddüse und bei einem angenommenen Substratabstand von 0.2 mm kann auch die Verweilzeit im beheizten Teil des Druckkopfes mit einem Volumen von beispielsweise ca. 200 mm$^3$ berechnet werden.

Das erfindungsgemäße Verfahren ist besonders für die Verarbeitung von hochmolekularen Schmelzklebstoffen, auch Hotmelts genannt, geeignet, die ein Molekulargewicht $M_w$ nach GPC in DMF/LiBr (1%) gegen Polystyrol-Standards und nach universeller Kalibrierung über einen Viskositätsdetektor von > 30000, bevorzugt > 50000, besonders bevorzugt > 80000, ganz besonders bevorzugt > 100000 g/mol aufweisen und/oder einen Speichermodul G' (Platte/Platte-Oszillationsviskosimeter gemäß ISO 6721-10:2015 bei einer Frequenz von 1/s) bei 20 °C oberhalb des Schmelzpunkts von $\geq 1 \cdot 10^4$ Pa, bevorzugt $\geq 5 \cdot 10^4$ Pa, besonders bevorzugt $\geq 1 \cdot 10^5$ Pa und ganz besonders bevorzugt $\geq 5 \cdot 10^5$ Pa aufweisen.

Besonders geeignete Schmelzklebstoffe, insbesondere Hotmelts, für den Einsatz in dem erfindungsgemäßen Verfahren zeichnen sich weiter durch eine langsame Kristallisation unterhalb der Schmelztemperatur aus. Dadurch ermöglicht man lange offene Zeiten des Klebstoffes bei Temperaturen unterhalb der Schmelztemperatur im Gegensatz zu klassischen Hotmelts, die bevorzugt heiß, das heißt bei Temperaturen um den Schmelzpunkt, gefügt werden.

In einer besonders bevorzugten Ausführungsform werden im erfindungsgemäßen Verfahren Schmelzklebstoffe, insbesondere Hotmelts, eingesetzt die eine lange offene Zeit von $\geq$ 1 min, bevorzugt $\geq$ 3 min, besonders bevorzugt $\geq$ 5 min und besonders bevorzugt $\geq$ 10 min bei einer Temperatur von 10 °C unterhalb des Schmelzpunktes, bevorzugt einer Temperatur von 20 °C unterhalb des Schmelzpunkt, besonders bevorzugt einer Temperatur von 30 °C unterhalb des Schmelzpunktes des Schmelzklebstoffes aufweisen. Insbesondere bevorzugt sind Schmelzklebstoffe, die eine offene Zeit in einem Bereich von 10 bis 30 Minuten bei einer Temperatur von 10 °C unterhalb des Schmelzpunktes des Schmelzklebstoffes aufweisen.

Unter "offene Zeit" des Klebstoffes, wird gemäß der Erfindung die Zeit bis zur Erhöhung der Viskosität um 500 %, bezogen auf die Ausgangsviskosität des Klebstoffs bei einer Temperatur, die 20 °C oberhalb des Schmelzpunktes liegt bei einer Abkühlrate von 4°C/min verstanden. Die Bestimmung der Viskosität wurde durch Viskosimetriemessung in der Schmelze mit einem Platte/Platte-Oszillationsviskosimeter gemäß ISO 6721-10:2015 bei 20°C oberhalb der Schmelztemperatur und einer Frequenz von 1/s bestimmt. Da die Viskositätserhöhung durch eine Rekristallisation verursacht wird, ist dieser Viskositätsanstieg bei einsetzender Kristallisation typischerweise sehr prägnant und erlaubt eine gut reproduzierbare Bestimmung der offenen Zeit.

In einer weiteren besonders bevorzugten Ausführungsform haben diese Hotmelts nach schneller Abkühlung durch Auftrag auf eine Substrat mit einer Temperatur von $\leq$ 30 °C und $\geq$ 10 °C direkt nach Abkühlung auf die Substrattemperatur einen Speichermodul G' (Platte/Platte-Oszillationsviskosimeter gemäß ISO 6721-10:2015 bei einer Frequenz von 1/s) von $\geq 1 \cdot 10^5$ Pa, bevorzugt $\geq 2 \cdot 10^5$ Pa, besonders bevorzugt $\geq 3 \cdot 10^5$ Pa und ganz besonders bevorzugt $\geq 4 \cdot 10^5$ Pa und $\leq 5 \cdot 10^7$ Pa, bevorzugt $\leq 1 \cdot 10^7$ Pa und besonders bevorzugt $\leq 5 \cdot 10^6$ Pa .

Die einzelnen Extrudat-Filamente, wie sie beispielsweise am Düsenausgang entstehen, können abhängig von der Düsengeometrie verschiedenste Gestalt annehmen. Bevorzugt werden rotationssymmetrische, kastenförmige oder schlitzförmige Düsengeometrien eingesetzt, die die Applikation von Beschichtungsstreifen mit einer Beschichtungsdicke von $\geq$ 20 μm bis $\leq$ 5 mm aufweisen, bevorzugt $\geq$ 50 μm bis $\leq$ 2 mm, besonders bevorzugt 80 μm bis $\leq$ 1 mm und ganz besonders bevorzugt 80 μm bis $\leq$ 0.5 mm ermöglichen. Bevorzugt liegt die Beschichtungsbreite in einem Bereich von

≥ 20 μm bis ≤ 2000 mm, weiter bevorzugt von ≥ 50 μm bis ≤ 100 mm, besonders bevorzugt von ≥ 80 μm bis ≤ 10 mm und ganz besonders bevorzugt von ≥ 80 μm bis ≤ 5 mm.

In einer bevorzugten Ausführungsform beträgt die Temperatur des Extrudates am Düsenkopf ≥ 200 °C, bevorzugt ≥ 230 °C und ganz besonders bevorzugt ≥ 250 °C. Die Hotmelts sind bevorzugt vor Gebrauch im erfindungsgemäßen Verfahren getrocknet und haben einen Wassergehalt von < 3 Gew.-%, bevorzugt < 1 Gew.-% und besonders bevorzugt < 0.5 Gew.-% und ganz besonders bevorzugt < 0.1 Gew.-%.

In einer bevorzugten Ausführungsform erfährt das Hotmelt im erfindungsgemäßen Verfahren ein Wärmeintegral, definiert als Fläche der Temperaturverweilzeit oberhalb der Schmelztemperatur des Hotmelts nach Zuführung in den Extruder und vor Applikation auf das Substrat, von ≤ 1000 °C·min, bevorzugt ≤ 500 °C·min, bevorzugt ≤ 200 °C·min und ganz besonders bevorzugt ≤ 100 °C·min und ≥ 2 °C·min, bevorzugt ≥ 5 °C·min und besonders bevorzugt ≥ 10 °C·min. Das Wärmeintegral wird beispielhaft berechnet für eine Verweilzeit von 5 min bei 200°C oberhalb der Schmelztemperatur als 200°C · 5 min = 1000 °C·min.

Bevorzugt liegt das Wärmeintegral in einem Bereich von ≤ 1000 °C·min bis ≥ 10 °C·min, weiter bevorzugt von ≤ 500 °C·min bis ≥ 5 °C·min besonders bevorzugt in ≤ 200 °C·min bis ≥ 2 °C·min.

In einer weiteren bevorzugten Ausführungsform wird bei dem Auftrag des Hotmelts auf das Substrat nach dem erfindungsgemäßen Verfahren ein Druck von ≥ 0,1 bar bevorzugt ≥ 0,5 bar bevorzugt, besonders bevorzugt ≥ 0,8 bar und ganz besonders bevorzugt ≥ 1 bar und ≤ 50 bar, bevorzugt ≤ 20 bar, besonders bevorzugt ≤ 10 bar auf das Substrat aufgebaut. Der hier behandelte Druck ist die Gesamtsumme aus dem Druck, der durch das Fördern des Hotmelts entsteht sowie dem Druck, den die Austragsöffnung mitsamt Austragselement, beispielsweise durch Federbelastung, pneumatischem oder hydraulischem Gegendruck, auf das Substrat ausübt.

Neben dem schmelzbaren Polymer kann das Material noch weitere Additive wie Füllstoffe, Pigmente, Adhäsionsverbesserer, Verlaufshilfsmittel, Entschäumer, Oxidations- und Hydrolyse-Stabilisatoren und dergleichen, aber auch weitere Polymere, enthalten. Der Gesamtgehalt an Additiven im Material kann beispielsweise ≥ 0,5 Gewichts-% bis ≤ 20 Gewichts-% betragen.

Das schmelzbare Polymer kann nach Erwärmen auf eine Temperatur von 20°C oberhalb des Schmelzpunktes und Abkühlen auf 20 °C bei einer Abkühlrate von 4 °C/min in einem Temperaturintervall von 25 °C bis 40 °C für ≥ 1 Minute (bevorzugt ≥ 1 Minute bis ≤ 100 Minuten, mehr bevorzugt ≥ 3 Minuten bis ≤ 80 Minuten, noch mehr bevorzugt ≥ 5 Minuten bis ≤ 60 Minuten), ein Speichermodul G' (bestimmt bei der jeweils herrschenden Temperatur mit einem Platte/Platte-Oszillationsviskosimeter gemäß ISO 6721-10:2015 bei einer Frequenz von 1/s) von ≥ 1·10⁵ Pa, bevorzugt ≥ 2·10⁵ Pa, besonders bevorzugt ≥ 3·10⁵ Pa und ganz besonders bevorzugt ≥ 4·10⁵ Pa bis ≤ 10 MPa bevorzugt ≤ 5 MPa und besonders bevorzugt ≤ 1 MPa aufweisen und nach Abkühlen auf 20 °C und Lagerung für 120 Minuten bei 20 °C ein Speichermodul G' (bestimmt bei 20 °C mit einem Platte/Platte-Oszillationsviskosimeter gemäß ISO 6721-10:2015 bei einer Frequenz von 1/s) von ≥ 20 MPa (bevorzugt ≥ 50, besonders bevorzugt ≥ 100 MPa) aufweisen.

Das schmelzbare Polymer kann ferner einen Betrag der komplexen Viskosität |η*| (bestimmt durch Viskosimetriemessung in der Schmelze mit einem Platte/Platte-Oszillationsviskosimeter gemäß ISO 6721-10:2015 bei 20°C oberhalb der Schmelztemperatur °C und einer Frequenz von 1/s) von ≥ 100 Pas bis ≤ 5000000 Pas aufweisen. Vorzugsweise beträgt |η*| bei diesen Messbedingungen ≥ 500 Pas bis ≤ 1000000 Pas, mehr bevorzugt ≥ 1000 Pas bis ≤ 500000 Pas. Ganz besonders bevorzugt beträgt |η*| bei diesen Messbedingungen ≥ 5000 Pas bis ≤ 100000 Pas.

Der Betrag der komplexen Viskosität |η*| beschreibt das Verhältnis der viskoelastischen Moduln G' (Speichermodul) und G" (Verlustmodul) zur Anregungsfrequenz ω in einer dynamischmechanischen Materialanalyse:

$$|\eta^*| = \sqrt{\left[\left(\frac{G'}{\omega}\right)^2 + \left(\frac{G''}{\omega}\right)^2\right]} = \frac{|G^*|}{\omega}$$

Bei den komplexen Viskositäten im erfindungsgemäß angegebenen Bereich kann davon ausgegangen werden, dass bei längerer Lagerung bei Raumtemperatur in dem eingesetzten schmelzbaren Polymer keine oder nur technisch unbedeutende Klebrigkeit ("tackiness") auftritt.

In einer weiteren bevorzugten Ausführungsform wird das Filament mit einer Geschwindigkeit von ≥ 150 mm/s aufgetragen. Diese wird auch als Auftrags- oder Verfahrgeschwindigkeit bezeichnet. Hierunter ist die Relativgeschwindigkeit von Austragsöffnung und Substrat zu verstehen. Vorzugsweise beträgt die Auftragsgeschwindigkeit ≥ 200 mm/s.

In einer weiteren bevorzugten Ausführungsform weist das schmelzbare Polymer eine Schmelzviskosität (Platte/Platte-Oszillationsviskosimeter gemäß ISO 6721-10:2015 bei einer Frequenz von 1/s) bei einer Temperatur von 20 °C über dem Schmelzpunkt $T_m$ von ≥ 1000 Pas bis ≤ 500000 Pas auf.

In einer weiteren bevorzugten Ausführungsform ist das schmelzbare Polymer derart ausgewählt, dass nach einer Lagerung bei der maximal erreichten Applikationstemperatur für eine Zeitdauer von ≤ 1 Stunde (vorzugsweise ≤ 30 Minuten, mehr bevorzugt ≤ 5 Minuten, besonders bevorzugt ≤ 1 Minute) der Speichermodul G' (DMA, dynamisch-mechanische Analyse gemäß DIN EN ISO 6721-1:2011 bei einer Frequenz von 1/s, insbesondere mit einem Platte/Platte-Oszillationsviskosimeter gemäß ISO 6721-10:2015 sich mehr als verdoppelt oder aber der Speichermodul G'(insbesondere mit einem Platte/Platte-Oszillationsviskosimeter gemäß ISO 6721-10:2015 bei einer Frequenz von 1/s) auf einen Wert von weniger als die Hälfte des Ausgangswertes sinkt. Die Verringerung von G' ist das bevorzugte Auswahlkriterium. Es wurde gefunden, dass die erfindungsgemäß bevorzugt einzusetzenden Polymere bei ihrer irgendwann unvermeidlichen thermischen Zersetzung keine oder nur geringe Gelbildung zeigen. Dann verringert sich die Gefahr von Verstopfungen einer Austragdüse.

In einer weiteren bevorzugten Ausführungsform wird vor dem Auftragen des Materials das Material von einer Temperatur ≤ 40 °C bevorzugt ≤ 30 °C innerhalb von ≤ 5 Minuten (vorzugsweise ≤ 2 Minuten, mehr bevorzugt ≤ 1 Minute) auf die maximale Applikationstemperatur erwärmt.

In einer weiteren bevorzugten Ausführungsform wird das Material innerhalb des Austragselements auf die vorgesehene maximale Applikationstemperatur erwärmt, so dass die Viskosität des Materials bei dieser Temperatur eine Verringerung um mindestens den Faktor 10 (bevorzugt um mindestens den Faktor 12, weiter bevorzugt um mindestens den Faktor 15) erfährt. Die Verringerung der Viskosität um den Faktor von mindesten 10 oder 12, oder 15, versteht sich gegenüber der Viskosität bei 20 °C oberhalb des Schmelzpunktes des Materials, gemessen mit einem Platte/Platte-Oszillationsviskosimeter gemäß ISO 6721-10:2015 bei einer Frequenz von 1/s.

In einer weiteren bevorzugten Ausführungsform wird das Material innerhalb des Austragselements auf die vorgesehene maximale Applikationstemperatur erwärmt, so dass die Viskosität des Materials bei dieser Temperatur gegenüber der Viskosität bei 20°C oberhalb des Schmelzpunktes eine Verringerung um mindestens den Faktor 20, bevorzugt um mindestens den Faktor 50, weiter bevorzugt um mindestens den Faktor 100, erfährt, gemessen mit einem Platte/Platte-Oszillationsviskosimeter gemäß ISO 6721-10:2015 bei einer Frequenz von 1/s.

In einer weiteren bevorzugten Ausführungsform beträgt der Abstand zwischen der Oberfläche des Substrats und der Austragsöffnung des Austragselementes ≤ 1 mm. Bevorzugt ist ein Abstand von ≤ 0.5 mm, mehr bevorzugt ≤ 0.1 mm. In einer weiteren bevorzugten Ausfuhrungsform des erfindungsgemäßen Verfahrens wird die Düse direkt mit dem Substrat kontaktiert beziehungsweise hat einen negativen Abstand zum Substrat. Diese Ausführungsform ist besonders vorteilhaft, wenn das Substrat weich elastisch ist und gegenüber der Düse und dem Druck des extrudierten Hotmelts nachgeben kann. In dieser besonderen Ausführungsform liegt der Austragsdruck des Hotmelts aus der Düse über dem Stauchmodul des Substrats. Diese Ausführungsform ist besonders vorteilhaft bei der Beschichtung von Geweben, Gelegen, Schäumen, weichen elastischen und porösen Materialien, da hier ein besonders guter Kontakt erzeugt werden kann.

Das Austragselement mit seiner Austragsöffnung kann mit einem konstanten Druck im Kontakt mit dem Substrat über das Substrat gefahren werden. Der Druck kann zum Beispiel über ein Federelement, ein Hydraulikelement oder einen Druckaufnehmer eingestellt werden. Vorteilhaft bei diesem Verfahren, besonders in Kombination mit einem eventuellen negativen Abstand der Austragsdüse zum Substrat, ist, dass eventuelle Unebenheiten oder Oberflächenungenauigkeiten des Substrats durch die konstante Druckfahrweise ausgeglichen werden können, ohne die Programmierung des Druckauftrags kontinuierlich verändern zu müssen.

Alternativ oder zusätzlich kann der Abstand der Düse zum Substrat durch eine kontinuierliche Abstandsmessung, zum Beispiel mittels Lasermessung, kontinuierlich vermessen und kontinuierlich neu justiert werden.

In einer weiteren bevorzugten Ausführungsform wird das Material mit einem Druck von ≥ 0.5 bar (bevorzugt ≥ 1 bar, mehr bevorzugt ≥ 1.5 bar) auf das Substrat aufgetragen.

Vorzugsweise ist das schmelzbare Polymer ein Polyurethan, das zumindest anteilsmäßig erhältlich ist aus der Reaktion von aromatischen und/oder aliphatischen Polyisocyanaten mit geeigneten (Poly)alkoholen und/oder (Poly)aminen oder deren Abmischungen. Bevorzugt werden zumindest anteilsmäßig als (Poly)alkohole solche aus der Gruppe bestehend aus: lineare Polyesterpolyole, Polyetherpolyole, Polycarbonatpolyole, Polyacrylatpolyole oder einer Kombination aus mindestens zwei hiervon eingesetzt. In einer bevorzugten Ausführungsform tragen diese (Poly)alkohole oder (Poly)amine endständige Alkohol- und/oder Amin-Funktionalitäten. In einer weiteren bevorzugten Ausführungsform haben die (Poly)alkohole und oder (Poly)amine ein Molekulargewicht von 52 bis 10000 g/mol. Bevorzugt haben diese (Poly)alkohole oder (Poly)amine als Einsatzstoffe einen Schmelzpunkt im Bereich von 5 bis 150 °C. Bevorzugte Polyisocyanate, die zumindest anteilmäßig zur Herstellung der schmelzbaren Polyurethane verwendet werden können, sind ausgewählt aus der Gruppe umfassend: TDI, MDI, HDI, PDI, H12MDI, IPDI, TODI, XDI, NDI, Decandiisocyanat oder einer Kombination aus mindestens zwei hiervon. Besonders bevorzugte Polyisocyanate sind HDI, PDI, H12MDI, MDI und TDI.

In einer weiteren bevorzugten Ausführungsform enthält das schmelzbare Polymer ein Polyurethan, das erhältlich ist aus der Reaktion einer Polyisocyanatkomponente und einer Polyolkomponente, wobei die Polyolkomponente ein Polyesterpolyol umfasst, welches einen Stockpunkt (ASTM D5985) von ≥ 25 °C aufweist.

Gegebenenfalls können bei der Reaktion zum Polyurethan weiterhin Diole des Molekulargewichtsbereichs von ≥ 62 bis ≤ 600 g/mol als Kettenverlängerungsmittel eingesetzt werden.

Die Polyisocyanatkomponente kann ein symmetrisches Polyisocyanat und/oder ein nichtsymmetrisches Polyisocyanat umfassen. Beispiele für symmetrische Polyisocyanate sind 4,4'-MDI und HDI.

Bei nicht-symmetrischen Polyisocyanaten ist die sterische Umgebung einer NCO-Gruppe im Molekül von der sterischen Umgebung einer weiteren NCO Gruppe verschieden. Es reagiert dann eine Isocyanatgruppe schneller mit gegenüber Isocyanaten reaktiven Gruppen, beispielsweise OH-Gruppen, während die verbleibende Isocyanatgruppe weniger reaktiv ist. Eine Folge des nicht-symmetrischen Aufbaus des Polyisocyanats ist, dass die mit diesen Polyisocyanaten aufgebauten Polyurethane auch eine weniger gerade Struktur aufweisen.

Beispiele geeigneter nicht-symmetrischer Polyisocyanate sind ausgewählt aus der Gruppe bestehend aus: 2,2,4-Trimethyl-hexamethylendiisocyanat, Ethylethylendiisocyanat, nicht-symmetrische Isomere des Dicyclohexylmethandiisocyanat ($H_{12}$-MDI), nicht-symmetrische Isomere des 1,4-Diisocyanatocyclohexan, nicht-symmetrische Isomere des 1,3-Diisocyanatocyclohexan, nicht-symmetrische Isomere des 1,2-Diisocyanatocyclohexan, nicht-symmetrische Isomere des 1,3-Diisocyanatocyclopentan, nicht-symmetrische Isomere des 1,2-Diisocyanatocyclopentan, nicht-symmetrische Isomere des 1,2-Diisocyanatocyclobutan, 1-Isocyanatomethyl-3-isocyanato-1,5,5-trimethylcyclohexan (Isophorondiisocyanat, IPDI), 1-Methyl-2,4-diisocyanato-cyclohexan, 1,6-Diisocyanato-2,2,4-trimethylhexan, 1,6-Diisocyanato-2,4,4-trimethylhexan, 5-Isocyanato-1-(3-isocyanatoprop-1-yl)-1,3,3-trimethyl-cyclohexan, 5-Isocyanato-1-(4-isocyanatobut-1-yl)-1,3,3-trimethyl-cyclohexan, 1-Isocyanato-2-(3-isocyanatoprop-1-yl)-cyclohexan, 1-Isocyanato-2-(2-isocyanatoeth-1-yl)-cyclohexan, 2-Heptyl-3,4-bis(9-isocyanatononyl)-1-pentyl-cyclohexan, Norbonandiisocyanatomethyl, 2,4'-Diphenylmethan-diisocyanat (MDI), 2,4- und 2,6-Toluylendiisocyanat (TDI), Derivate der aufgeführten Diisocyanate, insbesondere dimerisierte oder trimerisierte Typen, oder einer Kombination aus mindestens zwei hiervon.

Bevorzugt sind 4,4'-MDI oder eine Mischung enthaltend IPDI und HDI als Polyisocyanatkomponente.

Die Polyolkomponente weist ein Polyesterpolyol auf, welches einen Stockpunkt (No Flow Point, ASTM D5985) von $\geq$ 25 °C, vorzugsweise $\geq$ 35 °C, mehr bevorzugt $\geq$ 35 °C bis $\leq$ 55 °C aufweist. Zur Bestimmung des Stockpunkts wird ein Messgefäß mit der Probe in eine langsame Rotation (0.1 U/min) versetzt. Ein flexibel gelagerter Messkopf taucht in die Probe ein und wird bei Erreichen des Stockpunkts durch die sprunghafte Zunahme der Viskosität aus seiner Lage wegbewegt, die resultierende Kippbewegung löst einen Sensor aus.

Ohne auf eine Theorie beschränkt zu sein wird angenommen, dass Polyurethane auf der Basis der zuvor diskutierten nicht-symmetrischen Polyisocyanate und Polyesterpolyole mit den angegebenen Stockpunkten derart aufgebaut sind, dass die von den Polyisocyanaten stammenden Gruppen im Polymer Weichsegmente darstellen und die von den Polyesterpolyen stammenden Gruppen im Polymer Hartsegmente darstellen.

Beispiele für Polyesterpolyole, welche solch einen Stockpunkt aufweisen können, sind Reaktionsprodukte von Phthalsäure, Phthalsäureanhydrid oder symmetrischen $\alpha,\omega$-$C_4$- bis $C_{10}$-Dicarbonsäuren mit einem oder mehreren $C_2$- bis $C_{10}$-Diolen. Sie weisen bevorzugt ein zahlenmittleres Molekulargewicht $M_n$ von $\geq$ 400 g/mol bis $\leq$ 6000 g/mol auf. Geeignete Diole sind insbesondere Monoethylenglykol, 1,4-Butandiol, 1,6-Hexandiol und Neopentylglykol.

Bevorzugte Polyesterpolyole sind nachfolgend unter Angabe ihrer Säure- und Diolkomponenten angegeben: Adipinsäure + Monoethylenglykol; Adipinsäure + Monoethylenglykol + 1,4-Butandiol; Adipinsäure + 1,4-Butandiol; Adipinsäure + 1,6-Hexandiol + Neopentylglykol; Adipinsäure + 1,6-Hexandiol; Adipinsäure + 1,4-Butandiol + 1,6-Hexandiol; Phthalsäure(anhydrid) + Monoethylenglykol + Trimethylolpropan; Phthalsäure(anhydrid) + Monoethylenglykol, Polycaprolactone. Bevorzugte Polyurethane werden aus einer Mischung enthaltend IPDI und HDI als Polyisocyanatkomponente und einer Polyolkomponente enthaltend ein zuvor genanntes bevorzugtes Polyesterpolyol erhalten. Besonders bevorzugt ist die Kombination einer Mischung enthaltend IPDI und HDI als Polyisocyanatkomponente mit einem Polyesterpolyol aus Adipinsäure + 1,4-Butandiol + 1,6-Hexandiol zum Aufbau der Polyurethane.

Es ist ferner bevorzugt, dass die Polyesterpolyole eine OH-Zahl (DIN 53240) von $\geq$ 25 bis $\leq$ 170 mg KOH/g und/oder eine Viskosität (75 °C, DIN 51550) von $\geq$ 50 bis $\leq$ 5000 mPas aufweisen.

Als Beispiel genannt sei ein Polyurethan, das erhältlich ist aus der Reaktion einer Polyisocyanatkomponente und einer Polyolkomponente, wobei die Polyisocyanatkomponente ein HDI und IPDI umfasst und wobei die Polyolkomponente ein Polyesterpolyol umfasst, welches aus der Reaktion einer Reaktionsmischung umfassend Adipinsäure sowie 1,6-Hexandiol und 1,4-Butandiol mit einem Molverhältnis dieser Diole von $\geq$ 1:4 bis $\leq$ 4:1 erhältlich ist und welches ein zahlenmittleres Molekulargewicht $M_n$ (GPC, gegen Polystyrol-Standards) von $\geq$ 4000 g/mol bis $\leq$ 6000 g/mol aufweist. Solch ein Polyurethan kann einen Betrag der komplexen Viskosität I$\eta$*I (bestimmt durch Viskosimetriemessung in der Schmelze mit einem Platte/Platte-Oszillationsviskosimeter gemäß ISO 6721-10:2015 bei 100 °C und einer Frequenz von 1/s) von $\geq$ 2000 Pas bis $\leq$ 500000 Pas aufweisen.

Ein weiteres Beispiel für ein geeignetes Polyurethan ist:

1. Weitgehend lineare, endständige Hydroxylgruppen aufweisende Polyesterpolyurethane wie in EP 0192946 A1 beschrieben, hergestellt durch Umsetzung von

a) Polyesterdiolen eines über 600 liegenden Molekulargewichts und gegebenenfalls

b) Diolen des Molekulargewichtsbereichs von 62 bis 600 g/mol als Kettenverlängerungsmittel mit

c) aliphatischen Diisocyanaten

unter Einhaltung eines Äquivalentverhältnisses von Hydroxylgruppen der Komponenten a) und b) zu Isocyanatgruppen der Komponente c) von 1:0,9 bis 1:0,999, wobei die Komponente a) zu mindestens 80 Gew.-% aus Polyesterdiolen des Molekulargewichtsbereichs 4000 bis 6000 auf Basis von (i) Adipinsäure und (ii) Gemischen aus 1,4-Dihydroxybutan und 1,6-Dihydroxyhexan im Molverhältnis der Diole von 4:1 bis 1:4 besteht.

In den unter 1. genannten Polyesterpolyurethanen ist bevorzugt, dass die Komponente a) zu 100 % aus einem Polyesterdiol des Molekulargewichtsbereichs 4000 bis 6000 besteht, bei deren Herstellung als Diolgemisch ein Gemisch aus 1,4-Dihydroxybutan und 1,6-Dihydroxyhexan im Molverhältnis von 7:3 bis 1:2 verwendet worden ist.

In den unter 1. genannten Polyesterpolyurethanen ist ferner bevorzugt, dass die Komponente c) IPDI und weiterhin HDI enthält.

In den unter 1. genannten Polyesterpolyurethanen ist ferner bevorzugt, dass bei ihrer Herstellung als Komponente b) Alkandiole, ausgewählt aus der Gruppe bestehend aus: 1,2-Dihydroxyethan, 1,3-Dihydroxypropan, 1,4-Dihydroxybutan, 1,5-Dihydroxypentan, 1,6-Dihydroxyhexan oder einer Kombination aus mindestens zwei hiervon, in einer Menge von bis zu 200 Hydroxyläquivalentprozent, bezogen auf die Komponente a), mitverwendet worden sind.

In einer weiteren bevorzugten Ausführungsform des erfindungsgemäßen Verfahrens weist das schmelzbare Polymer nach Erwärmen auf 20 °C oberhalb seines Schmelzpunktes und Abkühlen auf 20 °C bei einer Abkühlrate von 4 °C/min in einem Temperaturintervall von 25 °C bis 40 °C für ≥ 1 Minute (bevorzugt ≥ 1 Minute bis ≤ 100 Minuten, mehr bevorzugt ≥ 5 Minuten bis ≤ 60 Minuten), ein Speichermodul G' (bestimmt bei der jeweils herrschenden Temperatur mit einem Platte/Platte-Oszillationsviskosimeter gemäß ISO 6721-10:2015 bei einer Frequenz von 1/s) von ≥ 100 kPa bis ≤ 10 MPa auf und nach Abkühlen auf 20 °C und Lagerung für 120 Minuten bei 20 °C ein Speichermodul G' (bestimmt bei 20 °C mit einem Platte/Platte-Oszillationsviskosimeter gemäß ISO 6721-10:2015 bei einer Frequenz von 1/s) von ≥ 20 MPa (bevorzugt ≥ 50 MPa, bevorzugt ≥ 100 MPa) auf.

In einer weiteren bevorzugten Ausführungsform wird das aufgetragene Material mit einem zweiten Substrat kontaktiert. Somit kann eine Verklebung erfolgen. Vorzugsweise erfolgt die Verklebung unter Druck, bis das Polymer auf Raumtemperatur abgekühlt ist. Die Kontaktierung erfolgt vorzugsweise unter Druck von ≥ 0,1 bar und ≤ 100 bar, bevorzugt ≥ 0,5 bar und ≤ 20 bar, besonders bevorzugt ≥ 1 bar.

In einer weiteren bevorzugten Ausführungsform weist das zweite Substrat einen Schmelzklebstoff auf und dieser wird mit dem aufgetragenen Material kontaktiert. Vorzugsweise ist dieser Schmelzklebstoff das gleiche Material wie bereits im erfindungsgemäßen Verfahren eingesetzt oder enthält wenigstens auch das im erfindungsgemäßen Verfahren eingesetzte schmelzbare Polymer. Die Kontaktierung erfolgt vorzugsweise unter Druck von ≥ 0,1 bar und ≤ 100 bar, bevorzugt ≥ 0,5 bar und ≤ 20 bar, besonders bevorzugt ≥ 1 bar und ≤ 10 bar. Es ist weiterhin bevorzugt, dass die Temperatur des Schmelzklebstoffes des zweiten Substrats ≤ 10 °C, vorzugsweise ≤ 20 °C, mehr bevorzugt ≤ 30 °C unterhalb der Schmelztemperatur dieses Klebstoffes liegt. Weiter ist es bevorzugt, dass das Kontaktieren bei einer Temperatur von ≤ 40 °C oder ≤ 30 °C erfolgt.

In einer weiteren bevorzugten Ausführungsform wird das Material innerhalb der Düse auf die maximale Applikationstemperatur erwärmt, das Material wird mit einer Eintragsgeschwindigkeit in die Düse eingetragen, mit einer Austragsgeschwindigkeit aus der Düse ausgetragen und die Austragsgeschwindigkeit ist größer als die Eintragsgeschwindigkeit. Die Austragsgeschwindigkeit kann zum Beispiel 3-mal, 4-mal oder bis zu 10-mal größer als die Eintragsgeschwindigkeit sein. Die konkreten Geschwindigkeitsverhältnisse hängen vom Durchmesser eines Filaments des in die Düse eingetragenen Materials und von der Filamentgeometrie des ausgetragenen Materials ab.

In einer weiteren bevorzugten Ausführungsform ist innerhalb der Düse das wenigstens teilweise geschmolzene Material einem Druck von ≥ 0.5 MPa ausgesetzt. Der Druck kann auch ≥ 1 MPa oder ≥ 5 MPa betragen.

In einer weiteren bevorzugten Ausführungsform wird die Düse so nahe an das Substrat herangeführt, dass der Materialdruck in der Düse über den berechneten theoretischen Druck steigt, da der Düsenabstand zum Substrat kleiner ist als der mittlere Durchmesser der Düse. Der Druck kann auch ≥ 1 MPa oder ≥ 2 MPa betragen.

In einer weiteren bevorzugten Ausführungsform ist das Verfahren ein Verfahren zur Herstellung eines Gegenstandes aus dem Material und das Verfahren umfasst die Schritte:

I) Auftragen eines Filaments des zumindest teilweise geschmolzenen Materials auf einen Träger, so dass eine Lage des Materials erhalten wird, welche einem ersten ausgewählten Querschnitt des Gegenstands entspricht;

II) Auftragen eines Filaments des zumindest teilweise geschmolzenen Materials auf eine zuvor aufgetragene Lage des Materials, so dass eine weitere Lage des Materials erhalten wird, welche einem weiteren ausgewählten Querschnitt des Gegenstands entspricht und welche mit der zuvor aufgetragenen Lage verbunden ist;

III) Wiederholen des Schritts II), bis der Gegenstand gebildet ist.

In dieser Ausführungsform wird ein Gegenstand schichtweise aufgebaut. Insofern handelt es sich um ein Schmelzschichtungs- oder Fused Deposition Modeling (FDM)-Verfahren. Ist die Anzahl der Wiederholungen für das Auftragen hinreichend gering, kann auch von einem zweidimensionalen Gegenstand gesprochen werden, der aufgebaut werden soll. Solch ein zweidimensionaler Gegenstand lässt sich auch als Beschichtung charakterisieren. Beispielsweise können zu dessen Aufbau ≥ 2 bis ≤ 20 Wiederholungen für das Auftragen durchgeführt werden.

Ein elektronisches Modell des zu bildenden Gegenstands liegt zweckmäßigerweise in einem CAD-Programm vor. Das CAD-Programm kann dann Querschnitte des Modells berechnen, die durch Auftragen des Filaments zu Querschnitten des Gegenstands werden.

Schritt I) betrifft den Aufbau der ersten Lage auf einen Träger. Anschließend wird so lange Schritt II) ausgeführt, in dem auf zuvor aufgetragene lagen des Materials weiter Lagen aufgetragen werden, bis das gewünschte Endergebnis in Form des Gegenstands erhalten wird. Das zumindest teilweise aufgeschmolzene Material (in der Terminologie des 3D-Drucks auch Aufbaumaterial genannt) verbindet sich mit bereits bestehenden Lagen des Materials, um eine Struktur in z-Richtung aufzubauen.

In einer weiteren bevorzugten Ausführungsform ist das Substrat ein Textil, eine Folie, ein Papier, ein Karton, ein Schaum, ein Formbauteil, ein Teil eines Schuhs, eine Leiterplatte für elektronische Schaltungen, ein Elektronikgehäuseteil oder ein elektronisches Bauteil.

Die Erfindung wird nachfolgend anhand der nachfolgenden Beispiele näher erläutert, ohne jedoch darauf beschränkt zu sein.

Messmethoden:

Die nachstehend aufgeführten Methoden zur Bestimmung der entsprechenden Parameter wurden zur Durchführung bzw. Auswertung der Beispiele angewendet und sind auch die Methoden zur Bestimmung der erfindungsgemäß relevanten Parameter im Allgemeinen.

Die zur Zeit der Versuchsdurchführung herrschende Umgebungstemperatur von 23 °C wird als RT (Raumtemperatur) bezeichnet.

Alle Prozentangaben beziehen sich, soweit nichts Anderslautendes vermerkt, auf das Gewicht (Gew.- %).

Wenn nicht anders angegeben, wurde die angegebene Viskosität mit einem Platte/Platte-Oszillationsviskosimeter gemäß ISO 6721-10:2015 bei einer Frequenz von 1/s bestimmt.

Die Glasübergangstemperatur $T_g$ und Schmelztemperaturen $T_m$ wurden mittels DSC (Differential Scanning Calorimetry) mit einem Kalorimeter mit der Bezeichnung Mettler DSC 12E (Mettler Toledo GmbH, Giessen, DE) bestimmt. Es wurden dazu ca. 10 mg Substanz in Aluminiumtiegel mit Deckel (Normalkapseln) eingewogen und der Tiegel fest verschlossen. Der Tiegel wurd bei RT (23°C) in die Messzelle des Kalorimeters eingesetzt und auf -100°C eingefroren. Nach Einstellen des Temperaturgleichgewichts wurden die Proben im Verlauf von drei aufeinander folgenden Aufheizungen mit der Aufheizgeschwindigkeit von 20K/min von -100°C bis +150°C erwärmt und mit einer Kühlrate von 320K/min wieder eingefroren. Zur Auswertung des Glaspunktes und Schmelzpunktes wurde jeweils die dritte Aufheizkurve benutzt.

Einsatzstoffe:

Zur Herstellung der Hotmelt-Filamente wurden hochmolekularee Klebstoffrohstoffe der Firma Covestro Deutschland AG verwendet. Zum Einsatz kamen Produkte aus der Dispercoll® U, Produktserie, dabei handelt es sich um anionische, hochmolekulare Polyurethan-Dispersionen in Wasser zur Herstellung von Klebstoffen z. B. für die Schuh-, Möbel-, Auto- und Bauindustrie.

Weitere Hotmelt-Filamente wurden auf Basis von Produkten aus der Desmocoll® Produktreihe hergestellt, dabei handelt es sich um gebräuchliche Klebstoffrohstoffe, die als Lösungsmittelklebstoffe zur Herstellung von Klebstoffen z. B. für die Schuh-, Möbel-, Auto- und Bauindustrie Verwendung finden.

Weitere Hotmelt-Filamente wurden auf Basis der Desmomelt® Produktreihe hergestellt, dabei handelt es sich um Schmelzklebstoffe, die bevorzugt als Lösungsmittelklebstoffe, als Pulverklebstoffe oder Folienklebstoffe heiß und unter Druck verarbeitet wurden.

Für die Herstellung der Filamente auf Basis der anionischen Klebstoffdispersionen der Dispercoll® U Serie wurden jeweils 1 kg der Lieferform als Dispersion in Wasser bei -18C über den Zeitraum von 12 h bei -18°C ausgefroren, im Anschluss über 12 h bei 23 °C aufgetaut und über einen 100 Mikrometer-Filter abfiltriert. Der Rückstand wurde über 24 h bei 30 °C in einem abgesaugten Trockenschrank getrocknet. Erhalten wurde ein weißes, grobkörniges Pulver. Nach Siebung über ein Sieb mit einer Maschenweite von 5 mm, wurde das unterhalb des Siebes erhaltene Pulver direkt in einem Extruder zu Filamenten verarbeitet.

Für die Herstellung der Filamente auf Basis der Desmocoll® Serie wurden die Rohstoffe in Lieferform als Pellets direkt zur Verarbeitung im Extruder verwendet.

Für die Herstellung der Filamente auf Basis der Desmomelt® Serie wurden die Rohstoffe in Lieferform als Pallets direkt zur Verarbeitung im Extruder verwendet.

Die Filamente wurden mit einem Doppelschneckenextruder der Fa. Fisher Scientific hergestellt. Das Gerät bestand aus einer Antriebseinheit Rheodrive7 und einer Compoundiereinheit Rheomex PTW 16/40 mit Doppelschnecke und einer Düse mit einem Durchmesser von 3 mm. Die Materialien wurden als getrocknetes Granulat mit 100 bis700 g/h in den Extruder gegeben, bei einer Temperatur von 80-150 °C aufgeschmolzen und aus der Düse gefördert. Die Schneckendrehzahl wurde lastabhängig auf ca. 10 bis 50 U/min eingestellt. Der aus der Düse austretende Strang wurde auf einen Durchmesser von ca. 2.85 mm nachverstreckt, über ein Wasserbad abgekühlt, mit Luft abgeblasen und als Filament aufgewickelt.

Das so erhaltene Filament wurde vor der Applikation als Hotmelt im erfindungsgemäßen Verfahren für weitere 24 h bei 30 °C getrocknet.

Die Restfeuchte aller eingesetzten Produkte beträgt < 1,5%. Die Restfeuchte wurde über die Gewichtsabnahme nach Lagerung für 8h bei 100°C im Umluftofen bestimmt. Die Materialien haben eine Gleichgewichtsfeuchte von ca. 1%, wenn das Material unter Normalbedingungen (also bei Raumtemperatur von 23°C, und Normaldruck aufbewahrt oder verarbeitet wird).

Alle eingesetzten Produkte wurden von der Covestro Deutschland AG bezogen

Dispercoll® U 54: Anionische, hochmolekulare Polyurethan-Dispersion zur Herstellung von Klebstoffen z. B. für die Möbel-, Auto-, Schuh- und Bauindustrie.

Dispercoll® U 53: Anionische, hochmolekulare Polyurethan-Dispersion zur Herstellung von Klebstoffen z. B. für die Möbel-, Auto-, Schuh- und Bauindustrie.

Dispercoll® U 56: Anionische, hochmolekulare Polyurethan-Dispersion zur Herstellung von Klebstoffen z. B. für die Möbel-, Auto-, Schuh- und Bauindustrie.

Dispercoll® U 58 Anionische, hochmolekulare Polyurethan-Dispersion zur Herstellung von Klebstoffen z. B. für die Möbel-, Auto-, Schuh- und Bauindustrie.

Dispercoll® U XP 2612 Anionische, hochmolekulare Polyurethan-Dispersion zur Herstellung von Klebstoffen z. B. für die Möbel-, Auto-, Schuh- und Bauindustrie.

Dispercoll® U XP 2710 Anionische, hochmolekulare Polyurethan-Dispersion zur Herstellung von Klebstoffen z. B. für die Möbel-, Auto-, Schuh- und Bauindustrie.

Desmocoll® 540/4 Weitgehend lineares, elastisches Hydroxylpolyurethan mit sehr starker Kristallisationsneigung. Hervorragende Adhäsion an PVC-Werkstoffe, hohe Anfangsfestigkeit und Wärmebeständigkeit der Klebungen

Desmocoll® 621/2 Weitgehend lineares, elastisches, stark kristallisierendes Hydroxylpolyurethan mit geringer Thermoplastizität. Geeignet zur Herstellung von Klebstoffen mit langer Kontaktklebzeit

Desmomelt® VPKA 8702 Weitgehend lineares, flexibles, sehr stark kristallisierendes Hydroxylpolyurethan. Das gemahlene Schmelzklebepulver ist z.B. geeignet für die Fertigung von Verbundaufbauten mittels Streubeschichtung

Daten für nichterfindungsgemäße Hotmelt Klebstoffe wurden aus öffentlich verfügbaren Datenblättern bezogen.

Experimente:

Als Drucker verwendet wurde ein X400 FDM 3D-Drucker der Firma German RepRap GmbH, ausgerüstet mit einem Volcano Hotend von E3D, mit einer Schmelzzone von ca. 209mm³ Volumen. Die Verarbeitung erfolgte unter Verwendung von ca. 2,8mm Durchmesser Filamenten, wenn nicht abweichend beschrieben unter den folgenden Verfahrensbedingungen: Baumraumtemperatur = 23 °C, Extrusionsdüsen-Durchmesser : 0., mm.

Zur Messung der Materialstabilität im Verfahren wurden die Filamente jeweils ca. 10 Minuten lang bei unterschiedlicher Düsentemperatur und unterschiedlichem Volumenstrom gefördert.

Die Verfahrgeschwindigkeit [mm/sec] ergab sich als Verhältnis der eingestellten Schichtdicke und Schichtbreite der Auftragung in Korrelation mit dem eingestellten Fördervolumenstrom durch eine gegebenen Austrittsdüse. Typische Werte waren eine Schichtdicke von 0, 1mm und eine Schichtbreite von 0,4mm bei einer Extrusionsdüse mit einem Durchmesser von 0,4mm.

Die Düsentemperatur wurde gegebenenfalls im Bereich von 200 °C - 290 °C variiert. Von dem Extrudat wurden mit einem Platte/Platte-Oszillationsviskosimeter bei einer Frequenz von 6,28 rad/s die Viskosität und der Speichermodul bei 100 °C bestimmt und mit dem Ausgangsmaterial des Filaments verglichen Dabei konnte gezeigt werden, dass bei der Herstellung der Filamente aus den getrockneten Pulvern kein signifikanter Abbau der Molekulargewichte zu beobachten war.

Es wurde beobachtet, dass die auf den erfindungsgemäßen Materialien basierenden Hotmelts im Vergleich zu gebräuchlichen PU-, EVA-, PE- oder Copolyamid-Hotmelts erst bei vergleichsweise hohen Temperaturen von deutlich über 100 °C oberhalb ihrer Schmelztemperatur nach dem erfindungsgemäßen Verfahren extrudiert werden konnten.

Die erfindungsgemäßen eingesetzten hochmolekularen Hotmelts zeigten im für die Extrusion notwendigen Temperaturbereich ein vergleichsweise schlechtes Alterungsverhalten über längere Zeiträume hinweg. Nur durch sehr kurze Verarbeitungszeiten bei den bevorzugten Extrusionstemperaturen im erfindungsgemäßen Verfahrens war der Einsatz dieser Hotmelts ohne signifikanten Verlust des Molekulargewichts und damit der Klebeeigenschaften möglich, besonders für Anwendungen mit hohen Anforderungen an die Sofortfestigkeit und an lange offene Zeiten.

Erfindungsgemäße Versuche werden im Folgenden mit * gekennzeichnet.

$$Tm\ (°C) = \text{Schmelzpunkt aus der DSC}$$

$$Tg\ (°C) = \text{Glaspunkt aus der DSC}$$

$$G´\ (Pa) = \text{Speichermodul gemessen im Platte/Platte Rheometer bei 6,28 rad/s, 1\% Amplitude.}$$

$$\eta\ (Pas) = \text{Betrag komplexer Viskosität gemessen in einem Platte/Platte Oszillations-Rheometer bei}$$

$$6{,}28\ \text{rad/s, 1\% Amplitude und einer vorgegebenen Temperatur.}$$

Tabelle 1. beschreibt die Erweichungstemperaturen und die Rheologie typischer erfindungsgemäßer Produkte, zur Ermittlung der Viskositäten wurde das Material auf 100°C erhitzt und dann in 4°C / min Schritten abgekühlt, wobei die Speichermodule G'(Pa) und Viskositäten η (Pas) bei 100°C (G'(100) und η(100)), bei 69°C (G'(69) und η(69)= sowie bei 49 °C (G'(49) und η(49)) ermittelt wurden:

Tabelle 1.

| Versuch | Produkt als Filament | Tg [°C] | Tm [°C] | G'(100) [Pa] | η(100) [Pas] | G'(69) [Pa] | η(69) [Pas] | G'(49) [Pa] | η(49) [Pas] |
|---------|----------------------|---------|---------|--------------|--------------|-------------|-------------|-------------|-------------|
| 1* | Dispercoll® U54 | -55 | 48 | 314000 | 56700 | 538000 | 91300 | 737000 | 122000 |
| 2* | Dispercoll® U53 | -57 | 48 | 336000 | 59100 | 574000 | 95600 | 766000 | 125000 |
| 3* | Dispercoll® U56 | -56 | 48 | 77400 | 17800 | 195000 | 37700 | 346000 | 61600 |
| 4* | Dispercoll® U58 | -57 | 48 | 578000 | 96100 | 798000 | 131000 | 986000 | 160000 |
| 5* | Dispercoll® UXP 2710 | -56 | 48 | 524000 | 87600 | 749000 | 122000 | 935000 | 151000 |
| 6* | Dispercoll® UXP 2612 | -56 | 48 | 308000 | 54600 | 521000 | 87900 | 745000 | 122000 |
| 7* | Desmocoll® 540/4 | -47 | 48 | 194000 | 40500 | 384000 | 71600 | 596000 | 103000 |
| 8* | Desmocoll® 621/2 | -47 | 48 | 243000 | 50000 | 471000 | 86500 | 722000 | 124000 |
| 9* | Desmomelt® VPKA 8702 | -47 | 48 | 21400 | 9170 | 83000 | 23700 | 216000 | 47200 |

Tabelle 2. beinhaltet Werte für die Viskositätsveränderung der erfindungsmäßigen Materialien über die Temperatur bis hin zur erfindungsgemäßen Verarbeitungstemperaturen. Die Proben wurden vor den durchgeführten Messungen jeweils 4 h (für die Proben, die bei 80°C bis 140°C- gemessen wurden) bzw. 72 h (für die Proben, die bei 140°C bis 200°C und 200°C bis 290°C gemessen wurden) bei 35°C im Vakuumschrank getrocknet und anschließend bei 80°C mit der Laborpresse zu Probenkörpern gepresst.

Die Messungen wurden mit einem ARES-Rheometer, Firma Rheometrics, System PP25mm (nach DIN 53019), bei 1Hz (w=6,28 1/s) unter Stickstoffatmosphäre durchgeführt. Die Heizrate betrug für einer erste Probe 3K/min (80°C bis 140°C), für die zweite Probe 5K/min (140°C bis 200°C) und für die dritte Probe 6K/min (200°C bis 290°C). Die Messung wurde in 3 Teile geteilt mit jeweils neuen Proben, um vorzeitige Alterungseffekte bei der Viskositätsmessung zu minimieren.

Die Daten der nichterfindungsgemäßen Hotmelts, wurden vom Hersteller übernommen. Die Daten der nichterfinderischen Hotmelts decken den typischen Bereich von Hotmeltmaterialien ab, zum Beispiel Verarbeitungsviskositäten von 0,5 bis 20 Pas in einem Temperaturbereich von 120 bis 220° kombiniert mit einem Potlife von typischerweise >> 1h bei den empfohlenen Verarbeitungstempeaturen um eine sichere Verarbeitung zu gewährleisten.

Tabelle 2.

| Versuch | Produkt als Filament | Viskosität [Pas] | | | | | | |
|---|---|---|---|---|---|---|---|---|
| | Bei T [°C] | 100 | 130 | 160 | 180 | 210 | 250 | 280 |
| 10* | Dispercoll® U56 | 20500 | 9520 | 3370 | 1520 | 432 | 48,1 | 1,41 |
| 11* | Dispercoll® U54 | 44600 | 24600 | 11700 | 6330 | 1720 | 33,9 | 2,27 |
| 12* | Dispercoll® U58 | 65200 | 55800 | 46400 | 37200 | 15400 | 8030 | 3,01 |
| 13 | **Technomelt® PS 8707 ET: 105-115°C, VT: 150-180°C | - | - | - | 3,2-4,8 | | - | |
| 14 | **Technomelt® PA 6238, ET: 133-145°C, VT: 180-220°C | - | - | 21-33 | 10-16 | | - | |
| 15 | **Technomelt® PA 657 black, ET: 150-165°C, VT: 180-230°C | - | - | - | | 3,7 | - | |
| 16 | **Technomelt® AS 5374 ET: 92-104°C, VT: 160-200°C | - | - | - | 2,3-3 | | - | |
| 17 | **Technomelt® AS 9268H ET: 82-90°C, VT: 170-190°C | - | - | 22,5-31,5 | - | | - | |
| ** Die Viskositätswerte der Vergleichsversuche wurden Veröffentlichungen des Herstellers (Produktdatenblätter von Hersteller Henkel AG) entnommen. Die Viskositäten der Vergleichsversuche wurden vom Hersteller mit einem Brookfield Viskosimeter bei 160 °C mit der Spindel 27 bestimmt. Die Werte waren in mPas angegeben und wurden in der Tabelle entsprechend umgerechnet. ET: steht für Erweichungstemperatur; VT steht für Verarbeitungstemperatur | | | | | | | | |

Tabelle 3. enthält Daten zur thermischen Stabilität der erfindungsgemäßen Produkte im erfindungsgemäßen Verfahren, wobei die Filamentextrusion über ein Hotend Volcano von E3D, mit einer Schmelzzone von ca. 209 mm³, 0,4 mm Durchmesser Extrusionsdüse erfolgte. Die rheologischen Daten vor und nach der Extrusion wurden bei 100°C, 6,28 rad/s, 1% Amplitude in einem Platte/Platte Rheometer bestimmt. Die tatsächliche Durchschnittstemperatur des Extrudates konnte dabei je nach Durchsatzgeschwindigkeit und Wärmeübergangskoeffizient des Hotends bzw. Wärmekapazität des zu extrudierenden Produktes, im Extrudat von außen nach innen inhomogen und niedriger sein als die in der Programmierung vorgegebene Hotend-Temperatur. Die Anwendungseigenschaften und Stabilitäten wurden hiervon eher positiv beeinflusst, da eine höhere Randtemperatur zu einer niedrigen Randschichtviskosität und einem geringeren Druckaufbau im Extruder und dadurch zu höheren Extrusionsgeschwindigkeiten führen kann. Die Filamentdicke betrug jeweils ca. 2,8 mm.

Mit "vorher" werden die Ergebnisse rheologischer Messungen vor der Extrusion bezeichnet. Mit "nachher" werden die Ergebnisse rheologischer Messungen nach der Extrusion bezeichnet.

Tabelle 3.

| Versuch | Material | Extrudertemperatur [°C] | Fördervolumenstrom Filament [mm/min] | Austrittsgeschwindigkeit Extrudat [mm/sec] | G' vorher [Pa] | G' nachher [Pa] | Verweilzeit [sec] | Wärme integral [°Cmin] |
|---|---|---|---|---|---|---|---|---|
| 18* | Dispercoll® U53 | 290 | 100 | 82 | 336000 | 82600 | 20 | 81 |
| 19* | Dispercoll® U56 | 290 | 100 | 82 | 77400 | 25100 | 20 | 81 |
| 20* | Dispercoll® U58 | 290 | 100 | 82 | 578000 | 268000 | 20 | 81 |
| 21* | Dispercoll® UXP 2612 | 290 | 100 | 82 | 308000 | 108000 | 20 | 81 |
| 22* | Desmocoll® 540/4 | 290 | 100 | 82 | 194000 | 102000 | 20 | 81 |
| 23* | Desmocoll® 621/2 | 290 | 100 | 82 | 243000 | 137000 | 20 | 81 |
| 24 | Dispercoll® U53 | 290 | 5 | 4 | 336000 | 1100 | 390 | 1573 |
| 25 | Dispercoll® U56 | 290 | 5 | 4 | 77400 | 1050 | 390 | 1573 |
| 26 | Dispercoll® U58 | 290 | 5 | 4 | 578000 | 45400 | 390 | 1573 |
| 27 | Dispercoll® UXP 2612 | 290 | 5 | 4 | 308000 | 870 | 390 | 1573 |
| 28 | Desmocoll® 540/4 | 290 | 5 | 4 | 194000 | 2500 | 390 | 1573 |
| 29 | Desmocoll® 621/2 | 290 | 5 | 4 | 243000 | 10800 | 390 | 1573 |
| 30 | Dispercoll® U56 | 210 | 5 | 4 | 77400 | 13900 | 390 | 1053 |
| 31 | Dispercoll® U 53 | 210 | 5 | 4 | 336000 | 82000 | 390 | 1053 |
| 32 | Dispercoll® U58 | 210 | 5 | 4 | 578000 | 176000 | 390 | 1053 |
| 33 | Dispercoll® UXP 2612 | 210 | 5 | 4 | 308000 | 54400 | 390 | 1053 |

Es zeigt sich, wie anhand der Werte in der Tabelle 3 zu entnehmen ist, dass sowohl hohe Extrusionstemperaturen als auch lange Verweilzeiten bei höheren Temperaturen zu signifikantem Molekulargewichtsabau (Viskositäts/Modul Abbau) des Produktes führen, weshalb diese Produkte in herkömmlichen Hotmelt-Extrusionen nicht ohne massiven Funktionsverlust verarbeitbar sind und nur die erfindungsgemäße Kombination einer hohen Applikationstemperatur und einer kurzen Verweilzeit zu ausreichend stabilen Produkten und guter Verarbeitbarkeit führt.

Tabelle 4. zeigt die Ergebnisse der Untersuchung der Alterungsbeständigkeit der Filamente in einem Umluftofen bei 290°C und 210°C für verschiedene Verweilzeiten. Verglichen wurden die rheologischen Daten vor und nach der Alterung gemessen bei 100°C; 6,28 rad/s, 1% Amplitude in einem oszillierenden Platte/Platte Rheometer. Dazu wurden jeweils 20 g Filament in einem runden Aluschälchen von 10 cm Durchmesser in einen vorgewärmten Umluftofen eingetragen und nach einer vorgegebenen Zeit wieder entnommen. Bei den Umluftöfen wird durch Öffnen die Ofentemperatur deutlich reduziert. Außerdem braucht die Probe eine gewisse Zeit um die Ofentemperatur anzunehmen. Deswegen ist die effektive Durchschnittstemperatur der Temperaturlagerung bei kurzen Verweilzeiten voraussichtlich etwas geringer als die angegebene Ofentemperatur.

Tabelle 4.

| Versuch | Material | OfenTemperatur [°C] | Verweilzeit [s] | G' vorher [Pa] | G' nachher [Pa] | Wärmeintegral [°Cmin] |
|---|---|---|---|---|---|---|
| 34 | Dispercoll® U53 | 290 | 540 | 336000 | 23 | 2178 |
| 35 | Dispercoll® U56 | 290 | 540 | 77400 | 22 | 2178 |
| 36 | Dispercoll® U58 | 290 | 540 | 578000 | 1000 | 2178 |
| 37 | Dispercoll®UXP 2612 | 290 | 540 | 308000 | 10 | 2178 |
| 38 | Desmocoll® 540/4 | 290 | 540 | 194000 | 16400 | 2178 |
| 39 | Desmocoll® 621/2 | 290 | 540 | 243000 | 6950 | 2178 |
| 40 | Dispercoll® U54 | 290 | 540 | 314000 | 46 | 2178 |
| 41 | Dispercoll® U 2710 | 290 | 540 | 524000 | 9 | 2178 |

Die Ofenmessung zeigt deutlich, dass die erfindungsgemäßen Produkte bei einer für Hotmelt Applikationen eher kurzen Verweilzeit bei den gewünschten Verfahrenstemperaturen keine ausreichende Thermostabilität aufweisen. Die hohe Temperatur wird benötigt, um eine ausreichend niedrige Verarbeitungsviskosität und somit applizierbare und als Klebstoffe geeignete Oberflächen benetzende Produkte zu erhalten. Daher lassen sich die erfindungsgemäßen Produkte nicht mit dem klassischen Verfahren als Hotmelt verarbeiten. Nur eine Applikationsmethode, die hohe Temperaturen mit sehr kurzen Verweilzeiten kombiniert, erlaubt den Einsatz der erfindungsgemäßen Produkte als Hotmelts mit guter Benetzung, extrem hohen Anfangsfestigkeiten und zum Teil herausragenden offenen Zeiten.

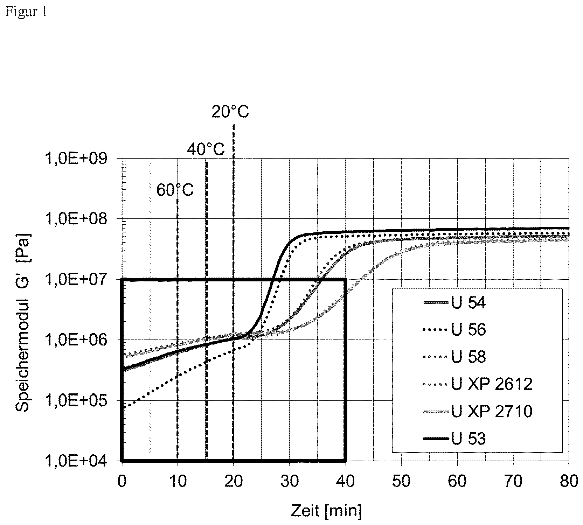

Das Diagramm in Figur 1 zeigt die offenen Zeiten und die jeweilige Viskosität der erfindungsgemäßen Produkte nach Abkühlung der Schmelze von 100°C auf 20°C. Wie in dem Diagramm in Figur 1 gezeigt, sind die Viskositätswerte bei 20 °C nach 20 Minuten erreicht. Wie in dem Diagramm gezeigt, liegen für alle 6 Beispiele, die auch in Tabelle aufgeführt sind (Dispercoll® U54, U56, U58, U XP2612, UXP 2710 und U53), die Viskositätswerte alle in einem Bereich, der gut verarbeitbar ist. Wie in dem Diagramm ebenfalls durch den schwarzen Rahmen von 0 bis 40 Minuten auf der X-Achse für die Zeit und von 1,0E+4 bis 1,0E+07 Pa auf der y-Achse für das Speichermodul, angedeutet, erstreckt sich der gut verarbeitbare Bereich für die Klebstoffe bis zu einem Speichermodul G'von 1,0E+07 Pa. Dies bedeutet für die Materialien Dispercoll® U53 und U56, deren Viskositätsverlauf durch die beiden linken Kurven wiedergegeben sind, dass sie bis ca. 25 Minuten verarbeitbar sind. Für die beiden mittleren Kurven, die dem Dispercoll® U 58 und U XP2710 entsprechen, eine gute Verarbeitbarkeit bis ca. 35 Minuten. Für die beiden rechten Kurven, die den Verlauf der Viskosität für Dispercoll® U XP 2612 und U XP 2710 angeben, bedeutet dies, dass sie mehr als 40 Minuten gut verarbeitbar sind.

Die in Tabelle 4 und in dem Diagramm in Figur 1 gezeigten Messwerte wurden auf einem Gerät Physica MCR101: bei 100 °C zu 20 °C bei einer Abkühlrate von -4 °C/min, bei einer Frequenz: 1 Hz, 1% Amplitude in Oszillation gemessen.

Anhand der Abkühlkurven bei sinkender Temperatur wird deutlich, dass die Viskosität mit der Temperatur deutlich ansteigt, aber auch deutlich unterhalb der Kristallisationstemperatur noch in einem Bereich bleibt, der eine Kontaktverklebung erlaubt. Es zeigen sich hier also lange offene Zeiten in denen eine Verklebung möglich ist. Das setzt die gezeigten Materialen deutlich von gängigen Hotmelts ab, die bei Unterschreitung der Kristallisationstemperatur typischerweise schnell aushärten oder alternativ mit großen Mengen niedermolekularer "Klebrigmachern" / Weichmacher vermischt werden müssen, die dann aber die mechanischen Eigenschaften stark beeinträchtigen.

Tabelle 5. zeigt das Ergebnis von Applikationsversuchen der erfindungsgemäßen Produkte nach dem erfindungsgemäßen Verfahren auf gängige Substrate und die damit erhaltenen Werte im Vergleich mit der Applikation vergleichbarer Dispersionsklebstoffe aus dem Stand der Technik.

Als Auftragsverfahren wurde ein X400 Drucker der Firma German RepRap GmbH verwendet, ausgerüstet mit einem Volcano Hotend von E3D, mit einer Schmelzzone von ca. 209mm$^3$. Die Verarbeitung erfolgte unter Verwendung von ca. 2,8 mm Durchmesser Filamenten unter den folgenden Verfahrensbedingungen: Bauraumtemperatur = 23 °C, Extrusionsdüsendurchmesser = 0,4 mm, Hotendtemperatur 290°C, eingestellte Verfahrgeschwindigkeit ca.250 mm/s (die Verfahrgeschwindigkeit enthält an Wendepunkten immer Brems- und Beschleunigungsstrecken, weshalb eine präzisere Angabe nicht möglich ist), in einem Abstand zum Substrat von 0,1 mm, wodurch beim Auftrag auf das Substrat das erfindungsgemäße Material aus der Extrusionsdüse deformiert und entsprechend dem Schmelzedruck auf dem Substrat in einer 0,1 mm Schichtdicke aufgetragen wurde.

Das Material wurde auf einen PVC Probenkörper (30% Weichmacher) mit den Ausmaßen 3cm*20cm aufgetragen, wobei eine Hälfte des Probenkörpers (10cm*3cm) mit dem Material durch Auftrag in Bahnen beschichtet wurde. Der so erhaltene Probenkörper wurde an der beschichteten Fläche mit einem weiteren (gegebenenfalls beschichteten) Probenkörper unter Druck gegebenenfalls nach Wärmeaktivierung verklebt und im Anschluss wurden nach festgelegten Zeiten die Sofort- und Endfestigkeit bestimmt. Die so erhaltenen Ergebnisse wurden mit den Ergebnissen der Applikation von typischen wässrigen Klebstoffformulierungen auf Basis der geprüften Produkte verglichen. 10 Minuten vor Auftrag des Klebstoffes wurde der PVC Streifen jeweils zur Reinigung / Aktivierung der Oberfläche mit Ethylacetat abgewischt. Wässrige Klebstoffe wurden in ca. 0,2 mm Schichtdicke nass als 50%tige Dispersion mit Hilfe eines Pinsel auf die PVC-Streifen gestrichen. Anschließend wurde der beschichtete Probenkörper 1h bei Umgebungstemperatur und 50% Luftfeuchtigkeit getrocknet. Die Wärmeaktivierung der getrockneten Klebstoffdispersion erfolgte durch 10 s Bestrahlung mit einem IR Flash Gerät von der Firma Funk, die Oberflächentemperatur nach Aktivierung betrug ca. 86 °C. Die PVC-Streifen wurden unmittelbar nach der Wärmeaktivierung mit der beschichteten Seite aufeinandergelegt, so dass die beschichteten Flächen eine möglichst große Überlappung hatten. In einer Presse wurde der Prüfkörper dann 1 Minute mit 4 bar zusammengepresst. Direkt nach der Pressung (innerhalb von 1 Minute) wurde dann die Sofortschälfestigkeitsprüfung als 180° Peel Test mit einer Abzugsgeschwindigkeit von 100 mm/min auf einer Zugmaschine von Zwick bestimmt. Die Endfestigkeit wurde ebenfalls mit einer Abzugsgeschwindigkeit von 100 mm/min nach 3 Tage bestimmt.

Test:

| | |
|---|---|
| Schälfestigkeit | PVC/PVC, 180° Peel Test. |
| Probenbreite | 30 mm |
| Vorkraft | 0 N |
| Prüfgeschwindigkeit Geschwindigkeit | 100 mm/min |
| Klebstoff | Dispercoll® U |
| Substrat 1 | PVC (30% Weichmacher) |
| Substrat 2 | PVC (30% Weichmacher) |
| IR-Aktivierung | 10s, Oberflächentemperatur nach Aktivierung ca. 86°C, |
| Fügebedingungen | 60s, 4 bar |

Tabelle 5. fasst die Ergebnisse der Klebstoffprüfung zusammen.

Tabelle 5.

| Versuch | Probe: | Applikation | Fügebedingungen | Initialfestigkeit [N/mm]] | Endfestigkeit [N/mm] |
|---|---|---|---|---|---|
| 42* | U54 Hotmelt | X400, 290°C, 0,1mm Schichtdicke, Verfahrgeschwindigkeit ca. 250 mm/s | 1-seitig appliziert, verpresst direkt nach Druck (<1min) | | 4,8 |
| 43* | U58 Hotmelt | X400, 290°C, 0,1mm Schichtdicke, Verfahrgeschwindigkeit ca. 250 mm/s | 1-seitig appliziert, verpresst 4bar, 60 s, direkt nach Druck (<1min) | | 8,5 |
| 44* | U58 Hotmelt | X400, 290°C, 0,1mm Schichtdicke, Verfahrgeschwindigkeit ca. 250 mm/s | 2-seitig appliziert, verpresst 4bar, 60 s, direkt nach Druck (<1min) | 10,4 | |
| 45* | U58 Hotmelt | X400, 290°C, 0,1mm Schichtdicke, Verfahrgeschwindigkeit ca. 250 mm/s | 2-seitig appliziert, verpresst per Hand, 10 s, direkt nach Druck (<1min) | | 9,8 |
| 46* | U58 Hotmelt | X400, 290°C, 0,1mm Schichtdicke, Verfahrgeschwindigkeit ca. 250 mm/s | 1-seitig appliziert, verpresst per Hand, 10 s, direkt nach Druck (<1min) | 1,1 | |
| 47* | U58 Hotmelt | X400, 290°C, 0,1mm Schichtdicke, Verfahrgeschwindigkeit ca. 250 mm/s | 1-seitig appliziert, verpresst 4bar, 60 s, direkt nach Druck (<1min) | 2,6 | |
| 48* | U54 Hotmelt | X400, 290°C, 0,1mm Schichtdicke, Verfahrgeschwindigkeit ca. 250 mm/s | 2-seitig appliziert, verpresst 4bar, 60 s, direkt nach Druck (<1min) | 7,3 | |
| 49* | U54 Hotmelt | X400, 290°C, 0,1mm Schichtdicke, Verfahrgeschwindigkeit ca. 250 mm/s | 1-seitig appliziert, verpresst per Hand, 10 s, direkt nach Druck (<1min) | 2,6 | |
| 50* | U54 Hotmelt | X400, 290°C, 0,1mm Schichtdicke, Verfahrgeschwindigkeit ca. 250 mm/s | 1-seitig appliziert, verpresst 4bar, 60 s, direkt nach Druck (<1min) | 6,4 | |
| 51* | U58 Hotmelt | X400, 290°C, 0,1mm Schichtdicke, Verfahrgeschwindigkeit ca. 250 mm/s | 2-seitig appliziert, verpresst 4bar, 60 s, direkt nach Druck (<1min) | | 16,3 |
| 52* | U54 Hotmelt | X400, 290°C, 0,1mm Schichtdicke, Verfahrgeschwindigk eit 250 mm/s | 1-seitig appliziert, verpresst 4bar, 60 s, direkt nach Wärmeaktivierung IR | | 10,5 |
| 53* | U58 Hotmelt | X400, 290°C, 0,1mm Schichtdicke, Verfahrgeschwindigk eit 250 mm/s | 2-seitig appliziert, verpresst 4bar, 60 s, direkt nach Wärmeaktivierung IR | | 15,4 |

(fortgesetzt)

| Versuch | Probe: | Applikation | Fügebedingungen | Initialfestigkeit [N/mm]] | Endfestigkeit [N/mm] |
|---|---|---|---|---|---|
| 54 | U54 wässrig | Pinsel, 23°C, 0,2mm Schichtdicke nass, 1h Trocknung bei 23°C | 2-seitig appliziert, verpresst 4bar, 60 s, direkt nach Wärmeaktivierung IR | 5,1 | 10,3 |
| 55 | U58 wässrig | Pinsel, 23°C, 0,2mm Schichtdicke nass, 1h Trocknung bei 23°C | 2-seitig appliziert, verpresst 4bar, 60 s, direkt nach Wärmeaktivierung IR | 5,9 | 11,1 |
| 56 | U54 wässrig | Pinsel, 23°C, 0,2mm Schichtdicke nass, 1h Trocknung bei 23°C | 1-seitig appliziert, verpresst 4bar, 60 s, ohne Wärmeaktivierung IR | 0,1 | |
| 57 | U58 wässrig | Pinsel, 23°C, 0,2mm Schichtdicke nass, 1h Trocknung bei 23°C | 1-seitig appliziert, verpresst 4bar, 60 s, ohne Wärmeaktivierung IR | 0,1 | |

Es zeigte sich, dass die erfindungsgemäße Applikation eines hochmolekularen Hotmelts zu vergleichbaren Eigenschaften führt wie die klassische Applikation von materialähnlichen Klebstoffdispersionen. Der Vorteil des erfindungsgemäßen Hotmelt Applikationsverfahrens in Kombination mit den erfindungsgemäßen Hotmelt Produkten besteht unter anderem darin, dass ein Zeit- und kostenaufwendiger Trocknungsprozess des Klebstoffes entfallen kann. Weiter ist ein einseitiger Klebstoffauftrag möglich. Ein weiterer Vorteil besteht darin, dass direkt nach Applikation des Klebstoffes gemäß dem erfindungsgemäßen Verfahren ohne weitere Wärmeaktivierung eine erfolgreiche Verklebung mit hoher Anfangsfestigkeit vorgenommen werden konnte.

**Patentansprüche**

1. Verfahren zum Applizieren eines ein schmelzbares Polymer enthaltenden Materials, umfassend den Schritt:

- Auftragen eines Filaments des zumindest teilweise geschmolzenen Materials aus einer Austragsöffnung eines Austragselementes heraus auf ein Substrat;
wobei das schmelzbare Polymer die folgenden Eigenschaften aufweist:

- einen Schmelzpunkt, bestimmt gemäß DSC, differential scanning calorimetry; 2. Aufheizung mit Aufheizrate 5 °C/min., in einem Bereich von $\geq$ 40 °C bis $\leq$ 120 °C;
- eine Glasübergangstemperatur, bestimmt gemäß DMA, dynamisch-mechanische Analyse gemäß DIN EN ISO 6721-1:2011, in einem Bereich von $\geq$ -70 °C bis $\leq$ 30 °C;
- einen Speichermodul G', bestimmt mit einem Platte/Platte-Oszillationsviskosimeter gemäß ISO 6721-10:2015 bei einer Frequenz von 1/s, bei 20 °C oberhalb des Schmelzpunkts von $\geq 1 \cdot 10^4$ Pa;
- einen Speichermodul G', bestimmt mit einem Platte/Platte-Oszillationsviskosimeter gemäß ISO 6721-10:2015 bei einer Frequenz von 1/s, bei 10 °C unterhalb des Schmelzpunkts bei vorangegangener Aufheizung auf eine Temperatur von 20 °C oberhalb des Schmelzpunktes und anschließender Abkühlung mit einer Abkühlrate von 1 °C/min. von $\leq 1 \cdot 10^7$ Pa;

wobei das Filament während des Applikationsprozesses für $\leq$ 5 Minuten eine Applikationstemperatur von $\geq$ 100 °C oberhalb des Schmelzpunktes des schmelzbaren Polymers aufweist,
wobei das schmelzbare Polymer weiterhin die Eigenschaft aufweist, dass der Speichermodul G', bestimmt mit einem Platte/Platte-Oszillationsviskosimeter gemäß ISO 6721-10:2015 bei einer Frequenz von 1/s, des schmelzbaren Polymers bei der höchsten während des Applikationsprozesses erreichten Applikationstemperatur um den Faktor $\geq$ 10 kleiner ist als der Speichermodul G', bestimmt mit einem Platte/Platte-Oszillationsviskosimeter gemäß ISO 6721-10:2015 bei einer Frequenz von 1/s, bei einer Temperatur von 20 °C oberhalb des Schmelzpunktes des schmelzbaren Polymers und
wobei das schmelzbare Polymer ausgewählt ist aus der Gruppe bestehend aus: Polyurethan, Polyester oder deren Kombination.

**2.** Verfahren gemäß Anspruch 1, wobei das Filament mit einer Geschwindigkeit von ≥ 150 mm/s aufgetragen wird.

**3.** Verfahren gemäß Anspruch 1 oder 2, wobei das schmelzbare Polymer derart ausgewählt ist, dass nach einer Lagerung bei der maximal erreichten Applikationstemperatur für eine Zeitdauer von ≤ 1 Stunde der Speichermodul G', bestimmt gemäß DMA, dynamisch-mechanische Analyse gemäß DIN EN ISO 6721-1:2011 bei einer Frequenz von 1/s, insbesondere mit einem Platte/Platte-Oszillationsviskosimeter gemäß ISO 6721-10:2015 bei einer Frequenz von 1/s, sich mehr als verdoppelt oder aber der Speichermodul G', bestimmt gemäß DMA, dynamisch-mechanische Analyse gemäß DIN EN ISO 6721-1:2011 bei einer Frequenz von 1/s, insbesondere mit einem Platte/Platte-Oszillationsviskosimeter gemäß ISO 6721-10:2015 bei einer Frequenz von 1/s, auf einen Wert von weniger als die Hälfte des Ausgangswertes sinkt.

**4.** Verfahren gemäß einem der Ansprüche 1 bis wobei vor dem Auftragen des Materials das Material von einer Temperatur ≤ 40 °C innerhalb von ≤ 5 Minuten auf die maximale Applikationstemperatur erwärmt wird.

**5.** Verfahren gemäß einem der Ansprüche 1 bis 4, wobei das Material innerhalb des Austragselements auf die vorgesehene maximale Applikationstemperatur erwärmt wird, so dass die Viskosität des Materials bei dieser Temperatur eine Verringerung um mindestens den Faktor 10 erfährt.

**6.** Verfahren gemäß einem der Ansprüche 1 bis 5, wobei der Abstand zwischen der Oberfläche des Substrats und der Austragsöffnung des Austragselementes ≤ 1 mm beträgt.

**7.** Verfahren gemäß einem der Ansprüche 1 bis 6, wobei das Austragselement mit seiner Austragsöffnung mit einem konstanten Druck im Kontakt mit dem Substrat über das Substrat gefahren wird.

**8.** Verfahren gemäß einem der Ansprüche 1 bis 7, wobei das Material mit einem Druck von ≥ 0.5 bar auf das Substrat aufgetragen wird.

**9.** Verfahren gemäß einem der Ansprüche 1 bis 8, wobei das schmelzbare Polymer ein Polyurethan enthält, das erhältlich ist aus der Reaktion einer Polyisocyanatkomponente und einer Polyolkomponente, wobei die Polyolkomponente ein Polyesterpolyol umfasst, welches einen Stockpunkt, bestimmt gemäß ASTM D5985, von ≥ 25 °C aufweist.

**10.** Verfahren gemäß einem der Ansprüche 1 bis 9, wobei das schmelzbare Polymer nach Erwärmen auf 20 °C oberhalb seines Schmelzpunktes und Abkühlen auf 20 °C bei einer Abkühlrate von 4 °C/min in einem Temperaturintervall von 25 °C bis 40 °C für ≥ 1 Minute ein Speichermodul G', bestimmt bei der jeweils herrschenden Temperatur mit einem Platte/Platte-Oszillationsviskosimeter gemäß ISO 6721-10:2015 bei einer Frequenz von 1/s, von ≥ 100 kPa bis ≤ 10 MPa aufweist und nach Abkühlen auf 20 °C und Lagerung für 120 Minuten bei 20 °C ein Speichermodul G', bestimmt bei 20 °C mit einem Platte/Platte-Oszillationsviskosimeter gemäß ISO 6721-10:2015 bei einer Frequenz von 1/s, von ≥ 20 MPa aufweist.

**11.** Verfahren gemäß einem der Ansprüche 1 bis 10, wobei das aufgetragene Material mit einem zweiten Substrat kontaktiert wird.

**12.** Verfahren gemäß Anspruch 11, wobei das zweite Substrat einen Schmelzklebstoff aufweist und dieser mit dem aufgetragenen Material kontaktiert wird.

**13.** Verfahren gemäß einem der Ansprüche 1 bis 12, wobei das Verfahren ein Verfahren zur Herstellung eines Gegenstandes aus dem Material ist und das Verfahren die Schritte umfasst:

I) Auftragen eines Filaments des zumindest teilweise geschmolzenen Materials auf einen Träger, so dass eine Lage des Materials erhalten wird, welche einem ersten ausgewählten Querschnitt des Gegenstands entspricht;
II) Auftragen eines Filaments des zumindest teilweise geschmolzenen Materials auf eine zuvor aufgetragene Lage des Materials, so dass eine weitere Lage des Materials erhalten wird, welche einem weiteren ausgewählten Querschnitt des Gegenstands entspricht und welche mit der zuvor aufgetragenen Lage verbunden ist;
III) Wiederholen des Schritts II), bis der Gegenstand gebildet ist.

**14.** Verfahren gemäß einem der Ansprüche 1 bis 13, wobei das Substrat ein Textil, eine Folie, ein Papier, ein Karton, ein Schaum, ein Formbauteil, ein Teil eines Schuhs, eine Leiterplatte für elektronische Schaltungen, ein Elektronikgehäuseteil oder ein elektronisches Bauteil ist.

**Claims**

1. Method of applying a material comprising a fusible polymer, comprising the step of:

   - applying a filament of the at least partly molten material from a discharge opening of a discharge element to a substrate;
   wherein
   the fusible polymer has the following properties:

   - a melting point, determined by DSC, differential scanning calorimetry; 2nd heating at heating rate 5°C/min, within a range from $\geq$ 40°C to $\leq$ 120°C;
   - a glass transition temperature, determined by DMA, dynamic-mechanical analysis to DIN EN ISO 6721-1:2011, within a range from $\geq$ -70°C to $\leq$ 30°C;
   - a storage modulus G', determined with a plate/plate oscillation viscometer to ISO 6721-10:2015 at a frequency of 1/s, at 20°C above the melting point of $\geq 1 \cdot 10^4$ Pa;
   - a storage modulus G', determined with a plate/plate oscillation viscometer to ISO 6721-10:2015 at a frequency of 1/s, at 10°C below the melting point with prior heating to a temperature of 20°C above the melting point and subsequent cooling at a cooling rate of 1°C/min of $\leq 1 \cdot 10^7$ Pa;

   wherein the filament, during the application process, has an application temperature of $\geq$ 100°C above the melting point of the fusible polymer for $\leq$ 5 minutes, wherein the fusible polymer also has the property that the storage modulus G', determined with a plate/plate oscillation viscometer to ISO 6721-10:2015 at a frequency of 1/s, of the fusible polymer at the highest application temperature attained during the application process is smaller by a factor of $\geq$ 10 than the storage modulus G', determined with a plate/plate oscillation viscometer to ISO 6721-10:2015 at a frequency of 1/s, at a temperature of 20°C above the melting point of the fusible polymer, and
   wherein the fusible polymer is selected from the group consisting of: polyurethane, polyester or a combination thereof.

2. Method according to Claim 1, wherein the filament is applied at a rate of $\geq$ 150 mm/s.

3. Method according to Claim 1 or 2, wherein the fusible polymer is selected such that, after storage at the maximum application temperature attained for a duration of $\leq$ 1 hour, the storage modulus G', determined by DMA, dynamic-mechanical analysis to DIN EN ISO 6721-1:2011 at a frequency of 1/s, especially with a plate/plate oscillation viscometer to ISO 6721-10:2015 at a frequency of 1/s, more than doubles, or else the storage modulus G', determined by DMA, dynamic-mechanical analysis to DIN EN ISO 6721-1:2011 at a frequency of 1/s, especially with a plate/plate oscillation viscometer to ISO 6721-10:2015 at a frequency of 1/s, falls to a value of less than half the starting value.

4. Method according to any of Claims 1 to 3, wherein, prior to the application of the material, the material is heated from a temperature of $\leq$ 40°C to the maximum application temperature within $\leq$ 5 minutes.

5. Method according to any of Claims 1 to 4, wherein the material within the discharge element is heated to the maximum application temperature envisaged, such that the viscosity of the material at this temperature experiences a decrease at least by a factor of 10.

6. Method according to any of Claims 1 to 5, wherein the distance between the surface of the substrate and the discharge opening of the discharge element is $\leq$ 1 mm.

7. Method according to any of Claims 1 to 6, wherein the discharge element with its discharge opening is run over the substrate in contact with the substrate at a constant pressure.

8. Method according to any of Claims 1 to 7, wherein the material is applied to the substrate at a pressure of $\geq$ 0.5 bar.

9. Method according to any of Claims 1 to 8, wherein the fusible polymer comprises a polyurethane obtainable from the reaction of a polyisocyanate component and a polyol component, where the polyol component includes a polyesterpolyol having a no-flow point, determined to ASTM D5985, of $\geq 25°C$.

10. Method according to any of Claims 1 to 9, wherein the fusible polymer, after heating to 20°C above its melting point and cooling to 20°C at a cooling rate of 4°C/min, within a temperature interval from 25°C to 40°C for $\geq 1$ minute, has a storage modulus G', determined at the respective temperature with a plate/plate oscillation viscometer to ISO 6721-10:2015 at a frequency of 1/s, of $\geq 100$ kPa to $\leq 10$ MPa and, after cooling to 20°C and storage at 20°C for 120 minutes, has a storage modulus G', determined at 20°C with a plate/plate oscillation viscometer to ISO 6721-10:2015 at a frequency of 1/s, of $\geq 20$ MPa.

11. Method according to any of Claims 1 to 10, wherein the material applied is contacted with a second substrate.

12. Method according to Claim 11, wherein the second substrate includes a hotmelt adhesive and is contacted with the material applied.

13. Method according to any of Claims 1 to 12, wherein the method is a method of producing an article from the material and the method comprises the steps of:

I) applying a filament of the at least partly molten material to a carrier so as to obtain a layer of the material, corresponding to a first selected cross section of the article;
II) applying a filament of the at least partly molten material to a previously applied layer of the material so as to obtain a further layer of the material, corresponding to a further selected cross section of the article and bonded to the layer applied beforehand;
III) repeating step II) until the article has been formed.

14. Method according to any of Claims 1 to 13, wherein the substrate is a textile, a foil, a paper, a cardboard, a foam, a mould component, part of a shoe, a circuit board for electronic circuits, an electronics housing part or an electronic component.


**Revendications**

1. Procédé d'application d'un matériau contenant un polymère fusible, comprenant l'étape

- application, sur un substrat, d'un filament du matériau au moins partiellement fondu, à partir d'un orifice d'éjection d'un élément d'éjection ;

dans lequel
le polymère fusible présente les propriétés suivantes :

- un point de fusion, déterminé par ACD, analyse calorimétrique différentielle ; 2e chauffage avec une vitesse de montée en température de 5 °C/min, dans la plage de $\geq 40$ °C à $\leq 120$ °C ;
- une température de transition vitreuse, déterminée par AMD, analyse mécanique-dynamique selon DIN EN ISO 6721-1:2011, dans la plage de $\geq$ -70 °C à < 30 °C ;
- un module de conservation G', déterminé avec un viscosimètre à oscillations à plateaux parallèles selon ISO 6721-10:2015 pour une fréquence de 1/s, à 20 °C au-delà du point de fusion, de $\geq 1 \cdot 10^4$ Pa ;
- un module de conservation G', déterminé avec un viscosimètre à oscillations à plateaux parallèles selon ISO 6721-10:2015 à une fréquence de 1/s, à 10 °C en dessous du point de fusion, après un chauffage préalable à une température de 20 °C au-delà du point de fusion, puis refroidissement à une vitesse de refroidissement de 1 °C/min, de $\leq 1 \cdot 10^7$ Pa ;
le filament présentant, pendant le processus d'application pendant $\leq 5$ minutes, une température d'application de $\geq 100$ °C au-delà du point de fusion du polymère fusible,
dans lequel le polymère fusible présente en outre la propriété selon laquelle le module de conservation G', déterminé avec un viscosimètre à oscillations à plateaux parallèles selon ISO 6721-10:2015 à une fréquence de 1/s, du polymère fusible à la température d'application la plus élevée atteinte pendant le processus d'application, est d'un facteur $\geq 10$ plus petit que le module de conservation G' déterminé avec un viscosimètre à oscillations à plateaux parallèles selon ISO 6721-10:2015 à une fréquence de 1/s, à une température de 20 °C au-delà du point de fusion du polymère fusible, et dans lequel le polymère fusible est choisi dans le groupe consistant en le polyuréthane, le polyester ou leur combinaison.

**2.** Procédé selon la revendication 1, dans lequel le filament est appliqué à une vitesse de ≥ 150 mm/s.

**3.** Procédé selon la revendication 1 ou 2, dans lequel le polymère fusible est choisi de telle sorte que, après un stockage à la température d'application maximale atteinte pendant une durée ≤ 1 heure, le module de conservation G', déterminé par AMD, analyse mécanique-dynamique, selon DIN EN ISO 6721-1:2011 à une fréquence de 1/s, en particulier avec un viscosimètre à oscillations à plateaux parallèles selon ISO 6721-10:2015 à une fréquence de 1/s, subit une diminution plus que double, ou encore le module de conservation G', déterminé par AMD, analyse mécanique-dynamique, selon DIN EN ISO 6721-1:2011 à une fréquence de 1/s, en particulier avec un viscosimètre à oscillations à plateaux parallèles selon ISO 6721-10:2015 à une fréquence de 1/s, diminue à une valeur inférieure à la moitié de la valeur de départ.

**4.** Procédé selon l'une des revendications 1 à 3, dans lequel le matériau, avant application du matériau, est chauffé d'une température ≤ 40 °C, en ≤ 5 minutes, à la température maximale d'application.

**5.** Procédé selon l'une des revendications 1 à 4, dans lequel le matériau est chauffé à l'intérieur de l'élément d'éjection à la température d'application maximale prévue, de sorte que la viscosité du matériau subisse à cette température une diminution d'au moins un facteur 10.

**6.** Procédé selon l'une des revendications 1 à 5, dans lequel la distance entre la surface du substrat et l'orifice d'éjection de l'élément d'éjection est ≤ 1 mm.

**7.** Procédé selon l'une des revendications 1 à 6, dans lequel l'élément d'éjection avec son orifice d'éjection est sous pression constante déplacé par-dessus le substrat en contact avec le substrat.

**8.** Procédé selon l'une des revendications 1 à 7, dans lequel le matériau est appliqué sur le substrat sous une pression de ≥ 0,5 bar.

**9.** Procédé selon l'une des revendications 1 à 8, dans lequel le polymère fusible contient un polyuréthane qui peut être obtenu par la réaction d'un composant polyisocyanate et d'un composant polyol, le composant polyol comprenant un polyesterpolyol qui présente un point d'écoulement, déterminé selon ASTM D5985, de ≥ 25 °C.

**10.** Procédé selon l'une des revendications 1 à 9, dans lequel le polymère fusible présente après chauffage à 20 °C au-delà du point de fusion et refroidissement à 20 °C pour une vitesse de refroidissement de 4 °C/min dans un intervalle de température de 25 °C à 40 °C pendant ≥ 1 minute un module de conservation G', déterminé à la température régnant dans chaque cas avec un viscosimètre à oscillations à plateaux parallèles selon ISO 6721-10:2015 à une fréquence de 1/s, de ≥ 100 kPa à ≤ 10 MPa et présente après refroidissement à 20 °C et stockage pendant 120 minutes à 20 °C un module de conservation G', déterminé à 20 °C avec un viscosimètre à oscillations à plateaux parallèles selon ISO 6721-10:2015 à une fréquence de 1/s, de ≥ 20 MPa.

**11.** Procédé selon l'une des revendications 1 à 10, dans lequel le matériau appliqué est mis en contact avec un deuxième substrat.

**12.** Procédé selon la revendication 11, dans lequel le deuxième substrat comprend un adhésif fusible, et ce dernier est mis en contact avec le matériau appliqué.

**13.** Procédé selon l'une des revendications 1 à 12, le procédé étant un procédé de fabrication d'un objet en le matériau, et le procédé comprenant les étapes suivantes :

I) application d'un filament du matériau au moins partiellement fondu sur un support, de façon à obtenir une couche du matériau qui correspond à une première section transversale choisie de l'objet ;
(II) application d'un filament du matériau au moins partiellement fondu sur une couche préalablement appliquée du matériau, de façon à obtenir une autre couche du matériau, qui correspond à une autre section transversale choisie de l'objet, et qui est assemblée à la couche préalablement appliquée ;
III) répétition de l'étape II) jusqu'à formation de l'objet.

**14.** Procédé selon l'une des revendications 1 à 13, dans lequel le substrat est un textile, une feuille, un papier, un carton, une mousse, un composant moulé, une partie de chaussure, une carte imprimée pour circuits électroniques, une partie de boîtier électronique ou un composant électronique.

Figur 1

**IN DER BESCHREIBUNG AUFGEFÜHRTE DOKUMENTE**

**In der Beschreibung aufgeführte Patentdokumente**

- US 5121329 A
- WO 2015197515 A1
- WO 2016198425 A1
- DE 102012020000 A1
- WO 2015109141 A1
- EP 0192946 A1